# EUROPÄISCHE PATENTSCHRIFT

(11) **EP 3 365 132 B1**
(45) Veröffentlichungstag und Bekanntmachung des Hinweises auf die Patenterteilung: **28.02.2024**
(21) Anmeldenummer: 16787791.9
(22) Anmeldetag: 21.10.2016
(51) Int. Cl.: B23B 31/02, B23Q 11/00, B23Q 17/09, B23B 31/30, B23Q 11/10

(54) **WERKZEUGHALTER MIT INTEGRIERTER SENSORIK**
TOOL HOLDER WITH INTEGRATED SENSOR SYSTEM
PORTE-OUTIL À CAPTEURS INTÉGRÉS

(30) Priorität: 21.10.2015 DE 102015220533
(43) Veröffentlichungstag der Anmeldung: 29.08.2018
(73) Patentinhaber: Haimer GmbH, 86568 Igenhausen (DE)
(72) Erfinder: ZIEGLTRUM, Franz, 85354 Freising (DE); LANDFRIED, Kim-Carolin, 93059 Regensbrug (DE); KEIL, Ferdinand, 64285 Darmstadt (DE); HOFMANN, Klaus, 64291 Darmstadt (DE); GROSCH, Thomas, 64285 Darmstadt (DE); ABELE, Eberhard, 77815 Bühl (DE)
(74) Vertreter: Ruttensperger Lachnit Trossin Gomoll
(86) Internationale Anmeldenummer: PCT/EP2016/075458
(87) Internationale Veröffentlichungsnummer: WO 2017/068158

(56) Entgegenhaltungen:
- EP-A1- 1 025 952
- EP-B1- 2 095 897
- WO-A1-2005/063437
- CN-B- 102 430 960
- DE-A1-102006 030 834
- DE-A1-102013 105 830
- JP-A- H03 111 117
- JP-A- H06 114 688
- JP-A- 2009 113 160
- US-A- 4 716 657
- US-A- 4 890 306
- US-A1- 2009 234 490
- US-A1- 2010 242 696

## Beschreibung

Die vorliegende Erfindung betrifft einen Werkzeughalter, welcher zur Rotation um eine eine axiale Richtung definierende Werkzeughalter-Drehachse ausgebildet ist und welcher an seinem einen axialen Längsende einen Werkzeugabschnitt mit einer Werkzeugaufnahmeformation zur Aufnahme eines Werkzeugs und an seinem anderen axialen Längsende einen Kopplungsabschnitt mit einer Kopplungsformation zur Drehmoment übertragenden Kopplung mit einer Maschinenspindel einer Werkzeugmaschine aufweist, wobei an dem Werkzeughalter eine Messvorrichtung zur Erfassung von den Betrieb des Werkzeughalters betreffenden Daten vorgesehen ist, welche wenigstens die folgenden Komponenten umfasst:
- wenigstens einen ein Erfassungssignal liefernden Sensor,
- eine Signalübertragungsvorrichtung zur Übertragung eines Messsignals von der Messvorrichtung zu einer gesondert vom Werkzeughalter ausgebildeten und entfernt von diesem angeordneten Empfangsvorrichtung,
- einen mit dem Sensor und der Signalübertragungsvorrichtung signalübertragungsmäßig verbundenen elektrischen Schaltkreis zur Ansteuerung des Sensors oder/und zur Verarbeitung des Erfassungssignals des Sensors oder/und zur Ansteuerung der Signalübertragungsvorrichtung, und
- einer Energieversorgungsvorrichtung, welche energieübertragungsmäßig mit der Signalübertragungsvorrichtung und dem elektrischen Schaltkreis verbunden ist.

Ein eingangs genannter Werkzeughalter ist aus der EP 2 103 379 A1 sowie aus der zu dieser parallelen US 2009/0235763 A1 bekannt. Diese Druckschriften offenbaren einen in einer Messnabe vorgesehenen Dehnungssensor zu Ermittlung einer auf den Werkzeughalter bearbeitungsbedingt einwirkenden Kraft. Die Messnabe ist als Adapterstück oder Zwischenstück in den dort als "Spannfutter" bezeichneten Werkzeughalter einsetzbar. Aus den mit der Messnabe ermittelten Dehnungen wird auf die an der Bearbeitungsstelle auftretenden Kräfte geschlossen.

Ein weiterer eingangs genannter Werkzeughalter ist aus der DE 90 14 037 U1 bekannt. Der dort als "Gewindeschneid- oder Bohrfutter" bezeichnete Werkzeughalter umfasst im Wesentlichen einen Futterschaft mit einem Steilkegel und einer daran einstückig ausgebildeten Greiferrille sowie ein mehrteiliges mit dem Futterschaft lösbar verbundenes Messvorrichtungsgehäuse, in welchem Batterien, Dehnungsmessstreifen, im Infrarotbereich sendende und empfangende Dioden als Signalübertragungsvorrichtung sowie wenigstens ein elektrischer Schalter aufgenommen sind. An das die Messtechnik aufnehmende Messvorrichtungsgehäuse schließt sich - wiederum unter lösbarer Anbindung - axial ein Futterkörper mit einer Werkzeugaufnahmeformation an. Auch diese Vorrichtung dient wie die zuvor genannte ausschließlich der Ermittlung von Dehnungen am Messvorrichtungsgehäuse, um aus den ermittelten Dehnungen auf die bei der Bearbeitung an den Schneiden des jeweiligen Werkzeugs auftretenden Bearbeitungskräfte zu schließen.

Die Verbindungsformationen zur Verbindung von Futterschaft und Messvorrichtungsgehäuse einerseits sowie von Messvorrichtungsgehäuse und Futterkörper andererseits sind gemäß der Lehre der DE 90 14 037 U1 identisch aufgebaut, so dass ein zerspanungstechnisch funktionsidentischer Werkzeughalter ohne Messvorrichtungsgehäuse und damit ohne Messtechnik gebildet werden kann, indem der Futterkörper unter Weglassung des Messvorrichtungsgehäuses unmittelbar mit dem Futterschaft verbunden wird.

Nachteilig an den beiden genannten mit einer Messvorrichtung versehenen Werkzeughaltern des Standes der Technik ist ihr mehrteiliger Aufbau, da Fügestellen stets eine Beeinträchtigung der Bauteilsteifigkeit bedeuten, was bei Werkzeughaltern das Risiko einer verringerten Bearbeitungsgenauigkeit des mit dem Werkzeughalter in dessen Werkzeugaufnahmeformation gehaltenen Werkzeugs bewirkt.

Weiter wird sowohl durch die bekannte Messnabe am erstgenannten Werkzeughalter wie auch durch das bekannte Messvorrichtungsgehäuse des zweitgenannten Werkzeughalters der jeweilige Werkzeughalter axial verlängert, was zu einer Verringerung der Steifigkeit des jeweiligen Werkzeughalters führen kann.

Bei dem erstgenannten Werkzeughalter des Standes der Technik kommt überdies hinzu, dass die Messnabe radial über den eigentlichen Werkzeughalter, wie er ohne Messnabe aussehen würde, hinaus vorsteht. Die Messnabe bildet somit eine Störkontur des Werkzeughalters, sodass der bekannte mit einer Messvorrichtung versehene Werkzeughalter ein radial anderes Raumvolumen einnimmt als ein zerspanungstechnisch funktionsidentischer Werkzeughalter ohne Messvorrichtung, was die Verwendbarkeit des Werkzeughalters stark einschränkt.

Darüber hinaus beeinflussen die Messvorrichtungen bei beiden Werkzeughaltern aus dem Stand der Technik das Vibrationsverhalten der Halter. Es besteht die Gefahr, dass das gewünschte Messsignal durch das Vorhandensein der Messvorrichtung verfälscht wird. Das Messergebnis ist also nur bedingt auf einen Werkzeughalter ohne Messvorrichtung übertragbar.

Die Druckschrift DE 10 2006 030 834 A1 offenbart den Gegenstand des Oberbegriffes des Anspruchs 1.

Die Druckschrift EP 1 025 952 A1 offenbart eine Arbeitsmaschine, umfassend eine Schneidemaschine, einen Werkzeughalter, der an der Spindel der Schneidemaschine angebracht oder von ihr entfernt werden kann, einen in dem Werkzeughalter installierten Sende- und Empfangsmechanismus und eine Steuerung zum Durchführen einer Funkkommunikation mit dem Sende- und Empfangsmechanismus auf elektromagnetischen Wellen. Eine den Sende- und Empfangsmechanismus bildende Antenne ist in einem für Radiowellen transparenten Material und einem Abdeckmaterial in einem Abstand vom Umfang des Werkzeughalters installiert. Dadurch wird eine Funkkommunikation zwischen dem Werkzeughalter und der externen Steuerung möglich.

Die Druckschrift WO 2005/063437 A1 offenbart ein Werkzeughalter für ein um eine Drehachse drehbares Werkzeug, insbesondere Bohr-, Fräs, Reib- oder Schleifwerkzeuge, umfassend einen Spannschaft, welcher in einem endseitigen Schaftbereich eine Spannanordnung mit einer zur Drehachse zentrischen Aufnahmeöffnung zur Aufnahme eines Halteschafts des Werkzeugs aufweist, wobei am Umfangsmantel der Aufnahmeöffnung Spannflächen zur Presssitzhalterung des Halteschafts des Werkzeugs vorgesehen sind, wobei der Werkzeughalter an einem bezüglich der Drehachse axialen Längsabschnitt wenigstens einen Aktorenkörper aus elektrostriktivem Material aufweist, welcher unter Änderung eines auf ihn einwirkenden elektrischen Potenzials seine Längenabmessung in wenigstens einer Raumrichtung ändert, wobei der Aktorenkörper mit einem elektrischen Potenzial beaufschlagbar an dem axialen Längsabschnitt derart in Kraftübertragungsbeziehung mit dem Werkzeughalter vorgesehen ist, dass der Aktorenkörper bei der Änderung seiner Längenabmessung eine Kraft auf den Werkzeughalter ausübt.

Die Druckschrift JP H06 114688 A offenbart ein Dehnungsmeßstreifenelement zur Drehmomenterfassung, welches an einer Werkzeughaltewelle befestigt ist, die an einer Haltewelle in Form eines Auslegers befestigt ist. Innerhalb eines Halters sind eine Signalübertragungsschaltung und eine Stromeinspeiseschaltung installiert, wobei erstere unter anderem aus Hochfrequenzmodulationsschaltung und Brückenschaltung besteht, die mit dem Dehnungsmessstreifenelement verbunden sind, während letztere aus einem Kondensator, einer Gleichrichterschaltung, einer Reglerschaltung usw. besteht. Im Inneren des Gehäuseteils des Halters ist ein Stromerzeugungsmechanismus vorgesehen, der aus einer Spule und einem mit Trägheit-drehbaren Permanentmagneten besteht. Die Verdrehung der Werkzeughaltewelle während der Bearbeitung wird durch das Dehnungsmesselement in Änderungen des elektrischen Widerstandswerts umgewandelt, und das Ergebnis wird vom Brückenausgang erfasst, und das erhaltene Signal wird hochfrequenzmoduliert und von einer Sendeantenne übertragen, und das gesendete Signal wird von einer externen Einheit empfangen, um zur Fehlerbeurteilung zu dienen.

Die Druckschrift JP H03 111117 A offenbart ein Werkzeug, wie einen Bohrer, das an einem Werkzeugfutterteil angebracht ist. Wenn an diesem Werkzeug ein Drehmoment angreift, das größer als ein vorgeschriebenes kritisches Lastdrehmoment ist, wird ein Kontakt mit einem Bedienterminal eines Funksenders in Kontakt gebracht, sodass ein Hochfrequenzsignal erzeugt wird, das über eine Antenne nach außen gesendet wird. Um dieses Signal zu empfangen, wird ein Empfänger an einer Position installiert, die der Position entspricht, an der beispielsweise ein Haltergehäuse im Inneren eines Werkzeugmaschinenkörpers angebracht werden soll. Wenn der Empfänger das über die Antenne übertragene kritische Drehmomentsignal empfängt, stoppt eine Steuerschaltung den Vorschub der Hauptspindel der Werkzeugmaschine.

Die Druckschrift CN 102 430 960 B offenbart eine Mess- und Aufzeichnungsvorrichtung für die Werkzeugzugkraft und die Werkzeugeinsetzkraft eines Manipulators, die eine modifizierte Werkzeughalterkomponente, eine Kraftmessvorrichtung und ein USB-Speicherkartenmodul umfasst. Die modifizierte Werkzeughalterkomponente besteht aus einem oberen modifizierten Werkzeughalter, einem mittleren modifizierten Werkzeughalter und einem unteren modifizierten Werkzeughalter. Die Kraftmessvorrichtung umfasst einen Zugdrucksensor und eine Ein-Chip-Mikrocomputerplatine. Das linke Ende des Zugdrucksensors ist mit dem rechten Ende des mittleren modifizierten Werkzeughalters über ein Gewinde verbunden, das rechte Ende des Zugdrucksensors ist mit dem oberen modifizierten Werkzeughalter über ein Gewinde verbunden und das untere modifizierte Werkzeughalter ist mit dem linken Ende des mittleren modifizierten Werkzeughalters über ein Gewinde verbunden.

Die Druckschrift US 2009/0234490 offenbart einen Werkzeughalter zur Verwendung mit einer Werkzeugmaschinenplattform, der Werkzeughalter umfasst einen Körper mit einem ersten Ende und einem gegenüberliegenden zweiten Ende, einen mit dem Körper angeordneten Prozessor und einen mit dem Körper angeordneten und mit dem Prozessor kommunizierenden Transceiver. Der Transceiver ist so aufgebaut, dass er mit einer externen Empfangsvorrichtung kommunizieren kann. Das erste Ende des Körpers ist so strukturiert, dass es mit der Werkzeugmaschinenplattform gekoppelt werden kann, und das gegenüberliegende zweite Ende ist so strukturiert, dass es selektiv mit einer Schneidbaugruppe gekoppelt werden kann, die eine Anzahl von Sensoren aufweist. Der Prozessor ist so strukturiert, dass er mit der Anzahl der Sensoren kommuniziert, wenn die Schneidebaugruppe mit dem Körper verbunden ist. Der Prozessor kann Datenanalyseaufgaben unter Verwendung modellbasierter Datenanalyse, digitaler Filterung und anderer Techniken durchführen. Der Werkzeughalter kann auf der Grundlage einer Zwei-Wege-Kommunikation mit einer Werkzeugmaschinensteuerung über einen Empfänger oder eine Schnittstellenvorrichtung Änderungen am Bearbeitungsprozess vorschlagen.

Die Druckschrift US 2010/0242696 A1 offenbart ein System mit einem Behälter und einem Werkzeughalter mit zwei Enden. Das eine Ende des Werkzeughalters ist zum Befestigen an einer Werkzeugmaschine und das andere Ende zum Anbringen einer Schneide oder eines Schneidenträgers ausgebildet. Der Werkzeughalter umfasst einen inneren Hohlraum, der von einer Hohlraumwand umgeben ist. Der Hohlraum nimmt den Behälter auf. Ein Ende des Hohlraums ist für den Anschluss an eine Zufuhr für ein Kühlmedium vorgesehen, und das andere Ende ist mit einem Auslass für das Kühlmedium verbunden. Der Hohlraum enthält außerdem eine Öffnung für den Einbau des Behälters. Zwischen dem Behälter und der Hohlraumwand ist mindestens ein Spalt zur Führung des Kühlmediums ausgebildet. Weiterhin wird ein Behälter zum Einbau in eine Werkzeugmaschine und die Verwendung des Behälters zur Aufnahme eines oder mehrerer Sensoren für Messgrößen oder zur Aufnahme eines Dämpfungssystems beschrieben.

Die Druckschrift US 4,890,306 A offenbart ein Werkzeughalter zur Überwachung der Betriebszeit eines auf dem Werkzeughalter gehaltenen Werkzeugs. Ein Sensor und eine elektrische Schaltung sind vorgesehen, um festzustellen, ob der Bearbeitungsvorgang mit dem Werkzeug ausgeführt wird oder nicht. Zähler sind vorgesehen, um die Zeit während der Ausführung des Bearbeitungsvorgangs kumulativ zu zählen. Die kumulative Zeit wird als die Betriebszeit des Werkzeugs gespeichert. Die Betriebszeit wird über eine Ausgabevorrichtung an ein numerisches Steuergerät ausgegeben.

Die Druckschrift DE 10 2013 105 830 A1 offenbart ein Werkzeugspannsystem mit einem Werkzeughalter zum Spannen eines Werkzeugs, wobei eine Einrichtung zur Erzeugung von elektrischer Energie aus mechanischer oder thermischer Energie des Werkzeugspannsystems vorgesehen ist, die vorzugsweise mindestens ein Seebeck-Element zur Erzeugung einer Spannung aus thermischer Energie des Werkzeugspannsystems aufweist.

Die Druckschrift US 4,716,657 A offenbart eine Maschine mit einem beweglichen Element, das in der Lage ist, ein Werkzeug zur Durchführung einer Operation an einem Werkstück lösbar zu tragen, und mit einer Zufuhr von unter Druck stehendem Fluid. Das Werkzeug enthält einen elektrischen Schaltkreis, der von einem elektrischen Generator mit Strom versorgt wird, der mit einer Turbine verbunden ist, die von der Druckflüssigkeitsversorgung der Maschine angetrieben wird. Die Turbine kann die Form einer Pelton-Turbine haben, deren Schaufeln in Drehung versetzt werden, indem die Druckflüssigkeit in einem Strahl auf sie gerichtet wird. Das unter Druck stehende Fluid kann eine Flüssigkeit oder ein Gas sein. Das Werkzeug kann eine von mehreren alternativen Formen annehmen, wie z. B. die einer Bohrstange oder einer Messsonde.

Die Druckschrift EP 2 095 897 A1 offenbart eine Bearbeitungseinheit, insbesondere für die Oberflächenbearbeitung von zylindrischen Hohlräumen, umfassend eine Werkzeughalteranordnung, die einen elektrischen Aktuator zur Einstellung der radialen Werkzeugposition enthält. Die Steuersignale des Aktuators werden von einer stationären elektronischen Steuereinheit über ein drahtloses Kommunikationssystem an den Aktuator übertragen. Ebenfalls an Bord der Werkzeughalteranordnung befindet sich ein System zur elektrischen Versorgung des Aktuators, das beispielsweise aus einer oder mehreren Batterien oder aus einem Stromerzeugungsmikrosystem besteht, das einen Teil des in den Bearbeitungsbereich eingeleiteten Hochdruck-Schmiermittel-Kühlmittelstroms nutzt.

Die Druckschrift JP 2009 113160 A offenbart eine Erfassungsvorrichtung, die erfasst, ob die durch ein Lager drehbar gelagerte Spindel während der Drehung oszilliert oder nicht. Die Erfassungsvorrichtung besteht aus einem Drehelement, das abnehmbar an der Spindel befestigt ist und synchron mit der Drehung der Spindel gedreht wird, und einem Beschleunigungssensor, der für das Drehelement vorgesehen ist, um eine Beschleunigung des Drehelements während der Drehung zu erfassen.

Es ist daher Aufgabe der vorliegenden Erfindung, einen Werkzeughalter derart weiterzubilden, dass er mit einer Messvorrichtung zur Erfassung von den Betrieb des Werkzeughalters betreffenden Daten versehen sein kann, ohne dass hierdurch die Raumforderung des Werkzeughalters verglichen mit einem Werkzeughalter ohne Messvorrichtung in nennenswertem Umfang ungünstig verändert wird.

Diese Aufgabe wird erfindungsgemäß durch einen Werkzeughalter nach Anspruch 1 sowie eine Vorrichtungsanordnung nach Anspruch 14 gelöst. Bevorzugte Ausführungsformen der Erfindung sind in den Unteransprüchen beschrieben.

Diese Aufgabe wird insbesondere durch einen Werkzeughalter der eingangs genannten Art gelöst, bei welchem unter anderem der Werkzeughalter einen Werkzeughalter-Grundkörper aufweist, welcher den Werkzeugabschnitt oder/und den Kopplungsabschnitt aufweist, wobei wenigstens eine Komponente aus Sensor, elektrischem Schaltkreis und Energieversorgungseinrichtung in einer Ausnehmung im Inneren des Werkzeughalter-Grundkörpers aufgenommen ist.

Durch die Aufnahme des wenigstens einen Sensors oder/und des elektrischen Schaltkreises oder/und der Energieversorgungseinrichtung der Messvorrichtung in einer Ausnehmung im Inneren des Werkzeughalter-Grundkörpers wird für die Anordnung wenigstens dieser Komponente genau jenes Raumvolumen genutzt, das ohnehin vom Werkzeughalter-Grundkörper als unverzichtbarer Träger wenigstens eines funktionsnotwendigen Abschnitts aus Werkzeugabschnitt und Kopplungsabschnitt eingenommen wird, sodass die wenigstens eine im Inneren des Werkzeughalter-Grundkörpers aufgenommene Komponente der Messvorrichtung keine Veränderung der äußeren Kontur des Werkzeughalters - verglichen mit einem zerspanungstechnisch funktionsidentischen Werkzeughalter ohne Messvorrichtung - erforderlich macht. Es muss also insbesondere nicht, wie im Stand der Technik, ein zusätzliches Messvorrichtungsgehäuse am Werkzeughalter-Grundkörper vorgesehen werden, das den Werkzeughalter - verglichen mit einem zerspanungstechnisch funktionsidentischen Werkzeughalter ohne Messvorrichtung - axial oder/und wenigstens abschnittsweise radial vergrößert. Somit kann jegliche durch das Vorsehen einer Messvorrichtung bewirkte Störkontur am erfindungsgemäßen Werkzeughalter entfallen.

"Im Inneren des Werkzeughaltergrundkörpers" ist dabei so zu verstehen, dass die Messvorrichtung in den bereits vorhandenen Grundkörper integriert wird, ohne dass zusätzliche Aufsätze oder Aufbauten erforderlich sind. Dies wird bereits durch den Begriff "Grundkörper" deutlich. Ein Befestigen der Messvorrichtung direkt auf den Umfangsflächen soll ebenso ausdrücklich verhindert werden.

Der Werkzeugabschnitt kann sowohl als Aufnahme zur direkten Spannung eines Werkzeuges als auch als Andockstelle für Module eines modular aufgebauten Werkzeughalters ausgebildet sein. Der Werkzeugabschnitt kann zur Nutzung jedes beliebigen Werkzeugspannverfahrens ausgebildet sein, z. B. Schrumpfspannung, Hydrodehnspannung, Zangenspannung, Schraubspannung, Klemmspannung etc.

Grundsätzlich kann der Werkzeughalter-Grundkörper mehrteilig ausgebildet sein, wobei bevorzugt die Bauteile des mehrteiligen Werkzeughalter-Grundkörpers bei bestimmungsgemäßem Betrieb relativ zueinander beweglich, aber unlösbar miteinander verbunden sein können, wie dies beispielsweise bei einem Gewindebohrfutter der Fall ist. Dann weist der Werkzeughalter-Grundkörper nicht nur einen Abschnitt aus Werkzeugabschnitt und Kopplungsabschnitt auf, sondern beide Abschnitte.

Bevorzugt ist der Werkzeughalter-Grundkörper einstückig ausgebildet. Durch die Verwendung eines einstückigen Werkzeughalter-Grundkörpers, welcher sowohl den Werkzeugabschnitt wie auch den Kopplungsabschnitt umfasst, wird eine hohe Grundsteifigkeit des Werkzeughalters bereitgestellt. Lösbare Fügestellen zwischen dem Werkzeugabschnitt und dem Kopplungsabschnitt, wie sie bei den eingangs genannten Werkzeughaltern des Standes der Technik notwendig sind, entfallen beim erfindungsgemäßen Werkzeughalter folglich.

Überdies erlaubt diese Bauweise den Einsatz eines erfindungsgemäßen Werkzeughalters mit Messvorrichtung exemplarisch für weitere zerspanungstechnisch funktionsidentische Werkzeughalter, jedoch ohne Messvorrichtung. Somit lassen sich Messergebnisse, die mit einem erfindungsgemäßen Werkzeughalter erzielt werden, ohne Weiteres auf andere zerspanungstechnisch identische Werkzeughalter ohne Messvorrichtung übertragen. Es ist also nicht notwendig, alle Werkzeughalter einer Werkzeugmaschine oder einer Werkzeugmaschinengruppe mit einer Messvorrichtung auszustatten.

Ein erfindungsgemäßer Werkzeughalter mit Messvorrichtung soll gemäß der vorliegenden Anmeldung zumindest dann mit einem anderen Werkzeughalter ohne Messvorrichtung als zerspanungstechnisch identisch angesehen werden, wenn seine Bestandteile ohne Berücksichtigung der Messvorrichtung mit den Bestandteilen des anderen Werkzeughalters identisch sind.

Vorteilhafterweise sind möglichst viele Komponenten der Messvorrichtung im Inneren des Werkzeughalter-Grundkörpers angeordnet, um möglichst keinen Bauraum zusätzlich zu dem ohnehin vom Werkzeughalter bzw. Werkzeughalter-Grundkörper eingenommenen Raumvolumen zu beanspruchen. Eine Ausnahme hiervon wird in der Regel die Signalübertragungsvorrichtung bilden, zumindest wenn der Werkzeughalter-Grundkörper, wie derzeit überwiegend üblich, aus Metall hergestellt ist. Metall bildet eine nahezu undurchdringliche Barriere für elektromagnetische Wellen, einschließlich Licht, sodass die Signalübertragungsvorrichtung funktionsnotwendigerweise außerhalb des vom Werkzeughalter-Grundkörper eingenommenen Raumvolumens angeordnet sein wird. Allerdings kann die Signalübertragungsvorrichtung oder wenigstens ein außen freiliegender Sende- oder Sende/Empfangsabschnitt derselben in einer Ausnehmung des Werkezughalter-Grundkörpers aufgenommen sein, so dass wiederum der erfindungsgemäße Werkzeughalter dieselbe Außenkontur wie ein zerspanungstechnisch funktionsidentischer Werkzeughalter ohne Messvorrichtung hat, der in Ermangelung einer Signalübertragungsvorrichtung die entsprechende Ausnehmung nicht aufweist.

Im Falle von nicht-metallischen Werkzeughalter-Grundkörpern, etwa aus Kohlenstoff, kann jedoch auch die Signalübertragungsvorrichtung im Inneren des Werkzeughalter-Grundkörpers angeordnet sein, sofern das Material des Werkzeughalter-Grundkörpers für das von der Signalübertragungsvorrichtung zur Signalübertragung verwendete physikalische Wirkprinzip durchlässig ist.

Das durch die Signalübertragungsvorrichtung übertragene Messsignal kann das Erfassungssignal des wenigstens einen Sensors sein oder kann ein durch den elektrischen Schaltkreis verarbeitetes und somit ein gegenüber dem unmittelbar von dem wenigstens einen Sensor gelieferten Erfassungssignal verändertes Signal sein.

Somit kann gemäß der vorliegenden Erfindung in vorteilhafter Weise ein Werkzeughalter mit Messvorrichtung erhalten werden, welcher bei Betrachtung orthogonal zur Werkzeughalter-Drehachse in wenigstens zwei unterschiedlichen Betrachtungsrichtungen, welche um 90° zueinander um die Werkzeughalter-Drehachse verdreht sind, die gleiche Außenkontur aufweist wie ein zerspanungstechnisch funktionsidentischer Werkzeughalter ohne Messvorrichtung. Dies berücksichtigt die Signalübertragungsvorrichtung, welche zwischen den um 90° zueinander verdrehten Betrachtungsrichtungen angeordnet sein kann. Vorzugsweise weist der erfindungsgemäße Werkzeughalter in drei unterschiedlichen Betrachtungsrichtungen, von welchen jeweils zwei benachbarte Betrachtungsrichtungen um 120° zueinander um die Werkzeughalter-Drehachse verdreht sind, die gleiche Außenkontur auf wie ein zerspanungstechnisch funktionsidentischer Werkzeughalter ohne Messvorrichtung. Bei ausreichend kleiner Signalübertragungsvorrichtung, welche in eine Vertiefung an der Außenseite des Werkzeughalters eingebracht sein kann, kann besonders bevorzugt der erfindungsgemäße Werkzeughalter in jeder beliebigen zur Werkzeughalter-Drehachse orthogonalen Betrachtungsrichtung die gleiche Außenkontur aufweisen wie ein zerspanungstechnisch funktionsidentischer Werkzeughalter ohne Messvorrichtung. Störkonturen sind somit durch die erfindungsgemäße Ausbildung des Werkzeughalters mit Messvorrichtung wenigstens reduziert, bevorzugt jedoch vollständig vermieden. Auch dieser Aspekt löst die eingangs genannte Aufgabe, die der vorliegenden Anmeldung zugrunde liegt.

Die Werkzeughalter-Drehachse bildet in der vorliegenden Beschreibung des erfindungsgemäßen Werkzeughalters und seiner vorteilhaften Weiterbildungen die Grundlage eines zylindrischen Polarkoordinatensystems, in welchem die Werkzeughalter-Drehachse eine axiale Richtung definiert, von welcher ausgehend zur Drehachse orthogonale Richtungen radiale Richtungen sind, wobei Umfangsrichtungen um die Drehachse solche Richtungen in einer Ebene orthogonal zur Drehachse sind, welche die radialen Richtungen in konstanter radialer Entfernung von der Drehachse orthogonal schneiden.

Der elektrische Schaltkreis kann einfach und bequem in wenigstens einer axialen Ausnehmung des Werkzeughalter-Grundkörpers aufgenommen sein. Diese wenigstens eine axiale Ausnehmung kann beispielsweise als eine sackartige Ausnehmung ausgebildet sein, welche in radialer Richtung sowie an einem axialen Längsende, vorzugsweise ausschließlich, durch Material des Werkzeughalter-Grundkörpers begrenzt sein kann.

Die axiale Ausnehmung verläuft vorzugsweise in Umfangsrichtung um die Werkzeughalter-Drehachse herum, um eine durch die Ausbildung der Ausnehmung bewirkte Unwucht des Werkzeughalters bei Rotation um die Werkzeughalter-Drehachse möglichst gering zu halten. Deshalb ist bevorzugt wenigstens eine die wenigstens eine axiale Ausnehmung nach radial außen begrenzende Seitenwand zylindrisch oder konisch mit der Werkzeughalter-Drehachse als Zylinderachse bzw. Konusachse ausgebildet. Die Unwucht kann weiter verringert bzw. vermieden werden, wenn sich die wenigstens eine axiale Ausnehmung vollständig um die Werkzeughalter-Drehachse herum erstreckt.

In vielen Fällen befindet sich im Bereich der Werkzeughalter-Drehachse an Werkzeughaltern bereits eine Ausnehmung, sei es zur Aufnahme eines Werkzeugs in der Werkzeugaufnahmeformation oder sei es zur Durchleitung eines Kühlmittels durch den Werkzeughalter zur Bearbeitungsstelle hin oder sei es für eine andere Aufgabe. In diesem Falle kann die wenigstens eine Ausnehmung zur Aufnahme des elektrischen Schaltkreises als ringförmige Ausnehmung ausgebildet sein, wobei dann nicht nur die radial nach außen begrenzende Seitenwand, sondern auch die radial nach innen begrenzende Seitenwand vorzugsweise zylindrisch oder konisch mit der Werkzeughalter-Drehachse als Zylinderachse bzw. Konusachse ausgebildet ist.

Der elektrische Schaltkreis kann durch mehrere Bauteile gebildet sein, von welchen wenigstens zwei in gesonderten axialen Ausnehmungen aufgenommen sein können. Hierzu kann der Werkzeughalter-Grundkörper wenigstens zwei axiale Ausnehmungen aufweisen, in welchen jeweils ein Bauteil des elektrischen Schaltkreises aufgenommen ist.

Grundsätzlich ist bevorzugt, dass der elektrische Schaltkreis wenigstens ein Schaltkreissubstrat umfasst, auf welchem Leiterbahnen und elektrische Komponenten vorgesehen sind. Dabei kann der elektrische Schaltkreis gemäß einer alternativen Ausführungsform mehrere voneinander gesonderte starre Schaltkreissubstrate umfassen, um diese auf möglichst engem Bauraum unterbringen zu können. Zur Vermeidung einer unerwünschten Unwucht des Werkzeughalters bei Rotation um seine Drehachse ist die Mehrzahl von starren Schaltkreissubstraten bevorzugt in Umfangsrichtung um die Werkzeughalter-Drehachse in der axialen Ausnehmung verteilt angeordnet. Dabei kann eine durch Verwendung einer Mehrzahl von Schaltkreissubstraten zu befürchtende Unwucht des Werkzeughalters bei Drehung um seine Drehachse dadurch weiter reduziert oder sogar ganz vermieden werden, dass die Mehrzahl von Schaltsubstraten derart verteilt angeordnet ist, dass eine Trägheitsachse der Gesamtheit der Schaltkreissubstrate im Wesentlichen mit der Werkzeughalter-Drehachse zusammenfällt.

Alternativ oder zusätzlich kann der elektrische Schaltkreis zur Sicherstellung seiner Unterbringbarkeit auf engstem Bauraum ein flexibles Schaltkreissubstrat umfassen, welches Leiterbahnen und elektrische Komponenten trägt. Das flexible Schaltkreissubstrat kann dann um die Werkzeughalter-Drehachse verformt, insbesondere gerollt, in der axialen Ausnehmung angeordnet sein.

Ganz allgemein gilt, dass eine durch die Anordnung der Messvorrichtung am Werkzeughalter mit Aufnahme von Komponenten der Messvorrichtung im Werkzeughalter bewirkte Unwucht in an sich bekannter Weise durch Auswuchten des Werkzeughalters beseitigt werden kann. Vorteilhaft ist es jedoch, die Messvorrichtung und ihre Komponenten derart am Werkzeughalter vorzusehen, dass die zu beseitigende Unwucht möglichst gering ist, also möglichst geringe Wuchtgewichte zu ihrer Beseitigung ausreichen.

Grundsätzlich kann es ausreichen, den elektrischen Schaltkreis und gegebenenfalls eine oder mehrere weitere Komponenten der Messvorrichtung in der wenigstens einen axialen Ausnehmung anzuordnen und dort zu fixieren, beispielsweise durch Verkleben oder/und Ausgießen der Ausnehmung mit Gießmasse, wie etwa Gießharz. Dann ist die in der wenigstens einen axialen Ausnehmung aufgenommene Komponente der Messvorrichtung jedoch unzugänglich bzw. nur noch zerstörend aus der Ausnehmung zu entfernen. Dagegen kann der elektrische Schaltkreis oder/und eine weitere in der axialen Ausnehmung aufgenommene Komponente in einfacher Weise ausgetauscht werden, wenn die wenigstens eine axiale Ausnehmung unter Abgrenzung eines Aufnahmeraumes mit einem Deckel verschließbar ist. Der Deckel kann ein Schraubdeckel sein, wobei bevorzugt dessen Gewinde derart orientiert ist, dass es bei Einwirkung des größeren betriebsgemäßen Drehmoments aus Beschleunigungsmoment und Bremsmoment des Werkzeughalters in einem Schließsinne beaufschlagt ist. Zusätzlich kann der Deckel gegen Verdrehen gesichert sein, vorzugsweise durch Kleben.

In dem Werkzeughalter-Grundkörper ist erfindungsgemäß zur Erfassung verschiedener sich betriebsbedingt verändernder physikalischer Größen wenigstens ein Sensor als Werkzeugabschnittssensor im Werkzeugabschnitt des Werkzeughalter-Grundkörpers angeordnet. Auch der Werkzeugabschnittssensor befindet sich somit in dem vom Werkzeughalter-Grundkörper ohnehin eingenommenen Raumvolumen. Um den Werkzeugabschnittssensor möglichst nahe an der Bearbeitungsstelle bzw. an dem im Werkzeughalter aufgenommenen Werkzeug anzuordnen, ist erfindungsgemäß der Werkzeugabschnittssensor radial zwischen einer radial inneren Wand einer Werkzeugaufnahmeausnehmung der Werkzeugaufnahmeformation und einer radial äußeren Außenwand des Werkzeughalter-Grundkörpers aufgenommen. Zum Schutz des Sensors kann dieser in axialer Entfernung von einer Stirnseite des Werkzeugabschnitts an einem werkzeugseitigen Längsende des Werkzeughalters im Inneren des Werkzeughalters aufgenommen sein.

Im Zweifelsfalle soll der Werkzeugabschnitt am Werkzeughalter als jener axiale Abschnitt angesehen werden, welcher sich ausgehend von dem werkzeugseitigen Längsende des Werkzeughalters wenigstens axial über die Länge der Werkzeugaufnahmeformation im Werkzeughalter erstreckt. Auf die konkrete Ausgestaltung der Werkzeugaufnahmefunktion kommt es dabei nicht an. Die Werkzeugaufnahmeformation kann beispielsweise ein Schrumpffutter oder ein Hydrodehnspannfutter oder eine Messerkopfaufnahme oder eine beliebige andere Werkzeugaufnahmeformation sein.

Beispielsweise dann, wenn die Werkzeugaufnahmeformation ein Hydrodehnspannfutter ist, kann der Werkzeugabschnittssensor in einer Wandung einer Druckkammer des Hydrodehnspannfutters angeordnet und zur mittelbaren oder unmittelbaren Erfassung des Spanndrucks in der Druckkammer ausgebildet sein. Dadurch kann während des Einsatzes des Werkzeughalters kontinuierlich überprüft werden, ob ein zur hydraulischen Einspannung eines Werkzeugs im Werkzeughalter erforderlicher Spanndruck vorliegt oder nicht. Eine mittelbare Erfassung des Spanndrucks ist beispielsweise dann gegeben, wenn zwischen dem Werkzeugabschnittssensor und der Druckkammer ein Wandabschnitt vorgesehen ist, welcher durch den Spanndruck verformt wird und der Werkzeugabschnittssensor die Verformung des Wandabschnitts erfasst. Der Werkzeugabschnittssensor ist in diesem Falle nicht unmittelbar mit dem Spanndruck beaufschlagt bzw. ist nicht unmittelbar von der den Spanndruck bereitstellenden Flüssigkeit benetzt.

Eine unmittelbare Erfassung des Spanndrucks ist dagegen gegeben, wenn ein Erfassungsabschnitt des Werkzeugabschnittssensors von der den Spanndruck bereitstellenden Flüssigkeit benetzt ist, etwa einen Teil der von der Flüssigkeit benetzten Wand der Druckkammer bildet.

Die genannte Spanndrucküberwachung ist bei Weitem nicht der einzige Erfassungszweck des Werkzeugabschnittssensors. Es können auch mehrere Werkzeugabschnittssensoren vorgesehen sein, welche entweder redundant dieselbe physikalische Größe erfassen oder welche unterschiedliche physikalische Größen erfassen. Beispielsweise kann ein Werkzeugabschnittssensor ein Temperatursensor sein, welcher die Betriebstemperatur des Werkzeugabschnitts erfasst. Dies kann besonders bei Schrumpffuttern als Werkzeugaufnahmeformation hilfreich sein, bei welchen die Einspannung des Werkzeugs in der Werkzeugaufnahmeformation durch thermische Ausdehnung und Schrumpfung von Material des Werkzeughalters bzw. Werkzeughalter-Grundkörpers erfolgt.

Alternativ oder zusätzlich kann der Werkzeugabschnittssensor ein Verformungssensor sein, etwa ein Dehnungsmesselement oder ein Piezosensor, um so mittelbar über die am Werkzeugabschnitt auftretende Verformung Rückschlüsse auf die an der Bearbeitungsstelle auftretenden Bearbeitungskräfte zu ziehen. Somit kann beispielsweise unter anderem ein spanabhebendes Werkzeug auf Verschleiß überwacht werden. Weiter kann der Werkzeugabschnittssensor zusätzlich oder alternativ ein Beschleunigungssensor sein, um beispielsweise - aber nicht nur - den Werkzeugabschnitt auf das Auftreten von Vibrationen hin zu überprüfen, was ebenfalls ein Anzeichen für Werkzeugverschleiß oder für nicht korrekt gewählte Betriebsparameter hinsichtlich Werkzeugdrehzahl oder/und Werkzeugvorschub sein kann. Ein Drucksensor als Werkzeugabschnittssensor wurde oben bereits in dem Beispiel der Drucckammern des Hydrodehnspannfutters geschildert. Die geschilderten Einsatzbeispiele sollen nur einen schlaglichtartigen Eindruck über die möglichen Einsatzzwecke von Sensoren im Werkzeughalter, insbesondere, aber nicht nur, von Werkzeugabschnittssensoren, geben. Fachleute werden ohne Weiteres die für ihren Anwendungsfall relevanten Betriebsparameter kennen und die zu deren Überwachung erforderlichen und geeigneten Sensoren auswählen können.

Zusätzlich oder alternativ zu dem oben beschriebenen Werkzeugabschnittssensor kann wenigstens ein Sensor als Kühlmittelsensor in einem Kühlmittelkanal zur Durchleitung eines Kühl- oder/und Schmiermittels im Werkzeughalter-Grundkörper angeordnet sein. Mit dem Kühlmittelsensor kann die Temperatur oder/und der Druck oder/und die pro Zeiteinheit strömende Menge des Kühlmittels erfasst werden. Was die Kühlmittelströmung anbelangt, so kann der Kühlmittelsensor auch lediglich zur qualitativen Erfassung einer Kühlmittelströmung dienen, also zur Erfassung, ob Kühlmittel strömt oder nicht. Hierzu kann der Kühlmittelsensor ein Temperatursensor oder/und ein Drucksensor oder/und ein Strömungssensor sein.

Zur Vermeidung unerwünschter Unwuchten am Werkzeughalter ist der Kühlmittelsensor bevorzugt in einem zentralen Kühlmittelkanal, also bevorzugt in einem von der Werkzeughalter-Drehachse durchsetzten Kühlmittelkanal angeordnet.

Zusätzlich oder alternativ kann wenigstens ein Sensor als Körpersensor in der zuvor beschriebenen axialen Ausnehmung angeordnet sein. Zur bestmöglichen Ausnutzung des von der axialen Ausnehmung umschlossenen Aufnahmeraums kann der Körpersensor an einer die Ausnehmung nach radial innen begrenzenden Innenwand oder/und an einer die Ausnehmung nach radial außen begrenzenden Außenwand angeordnet sein. In diesem Fall kann der Körpersensor unmittelbar an der Innen- oder/und Außenwand beispielsweise eine Temperatur, eine Verformung oder/und eine Beschleunigung, also etwa Vibration, oder/und Körperschall erfassen. Daher kann der Körpersensor bevorzugt ein Temperatursensor oder/und ein Verformungssensor oder/und ein Beschleunigungssensor sein.

In manchen Fällen kann es erforderlich sein, eine Mehrzahl gleichartiger Sensoren zur Erfassung einer ersten Betriebsgröße vorzusehen, sei es um die erste Betriebsgröße möglichst sicher mit Redundanz zu erfassen, sodass es für die Erfassung der ersten Betriebsgröße auf den Ausfall eines oder mehrerer Sensoren nicht ankommt, oder sei es um aus der mehrfach erfassten ersten Betriebsgröße auf eine zweite Betriebsgröße zu schließen. In jedem Fall ist es vorteilhaft, die Mehrzahl von gleichartigen Sensoren in Umfangsrichtung um die Werkzeughalter-Drehachse verteilt anzuordnen, besonders bevorzugt in Umfangsrichtung äquidistant anzuordnen. Gerade die möglichst symmetrische Anordnung gleichartiger Sensoren um die Werkzeughalter-Drehachse reduziert oder vermeidet die aus der Sensoranordnung möglicherweise entstehende Unwucht. Die symmetrische Anordnung gleichartiger Sensoren um die Werkzeughalter-Drehachse herum kann auch die mittelbare Erfassung einer zweiten Betriebsgröße erleichtern, denn symmetrisch um die Werkzeughalter-Drehachse angeordnete Sensoren können in bestimmten Betriebssituationen zu gleichen Zeiten hinsichtlich Betrag oder/und Richtung gleiche Erfassungssignale liefern. Sind die Erfassungssignale der einzelnen Sensoren betreffend die erste Betriebsgröße nicht gleich, kann hieraus auf das grundsätzliche Auftreten einer von null verschiedenen zweiten Betriebsgröße oder sogar auf Betrag und Richtung der zweiten Betriebsgröße geschlossen werden. Hierzu kann die Messvorrichtung eine Signalauswertungsvorrichtung umfassen, welche dazu ausgebildet ist, durch Vergleich der Erfassungssignale der Mehrzahl von Sensoren mittelbar auf eine von den Sensoren nicht unmittelbar erfasste zweite Betriebsgröße zu schließen.

So kann beispielsweise durch die Verwendung von radial und in Umfangsrichtung äquidistant bezüglich der Werkzeughalter-Drehachse angeordneten Tangentialbeschleunigungssensoren auf eine ansonsten nur mit Schwierigkeiten erfassbare Radialbeschleunigung des Werkzeughalters geschlossen werden. Dann nämlich, wenn eine Radialbeschleunigung des Werkzeughalters auftritt, sind die Erfassungssignale der in der oben genannten Art und Weise äquidistant angeordneten Tangentialbeschleunigungssensoren nicht gleich groß, wie es der Fall ohne auftretende Radialbeschleunigung wäre. Anhand der Unterschiede der Erfassungssignale der einzelnen Tangentialbeschleunigungssensoren kann sogar auf den Betrag und die Richtung der jeweils wirkenden Radialbeschleunigung geschlossen werden.

Der Einsatz von Radialbeschleunigungssensoren ist an Werkzeughaltern problematisch, da aufgrund der betriebsgemäß hohen Drehzahlen der Werkzeughalter so hohe Zentripetalbeschleunigungen wirken, dass bereits bei gewöhnlichem bestimmungsgemäßem Werkzeughalterbetrieb der Nenn-Erfassungsbereich handelsüblicher Beschleunigungssensoren überschritten wird.

Die Energieversorgungsvorrichtung kann ein elektrischer Energiespeicher sein. Der elektrische Energiespeicher kann im Falle seiner Erschöpfung austauschbar am Werkzeughalter vorgesehen sein oder/und kann wiederaufladbar, etwa als Akkumulator, ausgebildet sein. Der wiederaufladbare elektrische Energiespeicher braucht zu seiner Aufladung nicht vom Werkzeughalter entfernt werden, wenn er über einen entsprechenden Kopplungsmechanismus zur Kopplung mit einer Ladequelle verfügt. Dies kann in einem einfachen Fall eine Buchse oder ein Stecker sein. Dies kann in einem bevorzugten Fall ein Mechanismus zur induktiven Kopplung sein, sodass der elektrische Energiespeicher auch berührungslos wieder aufgeladen werden kann.

Die Energieversorgungsvorrichtung kann daher eine zur induktiven Übertragung von elektrischer Energie ausgebildete Induktionsvorrichtung, vorzugsweise eine Induktionsspule umfassen, wobei die Induktionsvorrichtung nicht nur zur Wiederaufladung eines elektrischen Energiespeichers gedacht sein kann, sondern zur Lieferung der aktuell benötigten elektrischen Energie, ohne Zwischenspeicherung derselben. Hierzu kann an der Werkzeugmaschine, an welcher der Werkzeughalter zum Einsatz kommt, eine weitere Induktionsvorrichtung vorgesehen sein, welche mit der Induktionsvorrichtung der Energieversorgungsvorrichtung des erfindungsgemäßen Werkzeughalters zur induktiven Energieübertragung zusammenwirken kann.

Um für die Energieversorgungsvorrichtung, etwa zu deren Austausch, eine erleichterte Zugänglichkeit sicherzustellen, kann vorgesehen sein, dass die Energieversorgungsvorrichtung in einer sich von einer Außenseite des Werkzeughalter-Grundkörpers nach axial oder/und radial innen erstreckenden Ausnehmung, bevorzugt sackartige Ausnehmung, aufgenommen ist. Da der Werkzeughalter-Grundkörper üblicherweise aus Metall gebildet ist, ist die Energieversorgungsvorrichtung zur Vermeidung von unerwünschten Kurzschlüssen bevorzugt unter Zwischenanordnung einer elektrisch isolierenden Isolationsformation in der sich nach radial innen erstreckenden Ausnehmung aufgenommen. Die sich nach radial innen erstreckende Ausnehmung kann sich ausschließlich in radialer Richtung erstrecken oder kann sich zusätzlich auch in Umfangsrichtung oder/und in axialer Richtung erstrecken. Bevorzugt befindet sich die Öffnung dieser Ausnehmung in einer nach radial außen weisenden Mantelfläche des Werkzeughalter-Grundkörpers.

Bevorzugt sind beide Pole der Energieversorgungseinrichtung gegenüber dem Werkzeughalter-Grundkörper isoliert, so dass beide Pole mit isolierten Leitungen verbunden sind, die die Energie zu den Verbrauchern führen. Alternativ kann aber auch einer der beiden Pole in elektrisch leitendem Kontakt mit dem Werkzeughalter-Grundköper stehen, sodass das Bezugspotential am gesamten Werkzeughalter-Grundkörper anliegt.

Wiederum kann die sich nach axial oder/und radial innen erstreckende Ausnehmung zur Aufnahme der Energieversorgungsvorrichtung - wie zuvor die axiale Ausnehmung zur Aufnahme des elektrischen Schaltkreises - stabil als sacklochartige Ausnehmung ausgebildet sein. Zum Schutz der Energieversorgungsvorrichtung kann die sich nach axial oder/und radial innen erstreckende Ausnehmung unter Abgrenzung eines Aufnahmevolumens von einem Deckel verschließbar sein. Bevorzugt ist der Deckel zu erleichterten Zugänglichkeit der Energieversorgungsvorrichtung lösbar an der Ausnehmung anbringbar, etwa als Schraubdeckel.

Die Messvorrichtung kann darüber hinaus mit einer Einrichtung versehen sein, welche die in den elektrischen Erfassungssignalen von im Werkzeughalter angeordneten Sensoren enthaltene elektrische Energie der Energieversorgungsvorrichtung zuführt, etwa zum Zwecke der Speicherung von elektrischer Energie in einem elektrischen Energiespeicher.

Um eine möglichst ungestörte Übertragung des Messsignals an eine hierfür in der Regel außerhalb des Werkzeughalters vorgesehene Empfangsvorrichtung sicherzustellen, ist die Signalübertragungsvorrichtung an der Außenseite des Werkzeughalter-Grundkörpers angeordnet. Die Signalübertragungsvorrichtung ist dabei bevorzugt auf die Außenseite des Werkzeughalter-Grundkörpers aufgeklebt, da eine Klebung zum einen eine ausreichende Verbindungsfestigkeit bereitstellt und zum anderen die Verbindung unterschiedlicher Werkstoffe gestattet.

Die Signalübertragungsvorrichtung kann Messsignale in jeder geeigneten Form übertragen, bevorzugt durch elektromagnetische Wellen, wie Funkwellen oder auch Licht, insbesondere nicht sichtbares Licht im Infrarotbereich. Bevorzugt wird zur Signalübertragung ein bereits etablierter Standard verwendet, wie etwa Bluetooth0, ZigBee^{®} oder dergleichen.

Üblicherweise weist der Werkzeughalter an seiner Außenseite eine in Umfangsrichtung um die Werkzeughalter-Drehachse verlaufende Greiferrille auf, welche in an sich bekannter Weise zum Formschlusseingriff mit einer Greifeinrichtung ausgebildet ist. Da die Greiferrille zwischen zwei axial einander gegenüberliegenden Flanken begrenzt ist, kann beispielsweise die Beflankung der Greiferrille verwendet werden, um die Signalübertragungsvorrichtung an der Außenseite des Werkzeughalter-Grundkörpers, aber dennoch zu einem gewissen Grad geschützt vor äußeren Einflüssen vorzusehen. So kann die Signalübertragungsvorrichtung auf einem die Greiferrille axial begrenzenden Radialvorsprung angeordnet sein. Der Radialvorsprung liegt während der Bearbeitung eines Werkstücks durch ein im Werkzeughalter aufgenommenes Werkzeug frei, ist jedoch von der Bearbeitungsstelle entfernt und wird durch diese nicht beeinflusst, beispielsweise durch spritzendes Kühlmittel oder Späneanfall.

Beispielsweise kann die Signalübertragungsvorrichtung in einer der Greiferrille axial benachbarten Vertiefung aufgenommen sein. Die Signalübertragungsvorrichtung kann beispielsweise in einer Vertiefung des Radialvorsprungs aufgenommen sein, welcher auch der Beflankung der Greiferrille dient.

So kann beispielsweise die Signalübertragungsvorrichtung dann ohne jegliche Störung der Greiferrille mechanisch durch in radialer Richtung über sie hinausragende Werkzeughalter-Grundkörperabschnitte geschützt am Werkzeughalter-Grundkörper angeordnet sein, wenn zwischen der die Signalübertragungsvorrichtung aufnehmenden Vertiefung und der Greiferrille ein radial vorstehender und in Umfangsrichtung verlaufender Steg vorgesehen ist, welcher die Vertiefung von der Greiferrille trennt. Dabei kann die zur Greiferrille weisende axiale Seite des Stegs eine Flanke der Greiferrille bilden.

Es versteht sich, dass die Signalübertragungsvorrichtung in analoger Weise auch an der zylinderförmigen Außenseite von Werkzeughaltern befestigt sein kann, die über keine Greiferrille verfügen.

Häufig weist der Werkzeughalter an seiner Außenseite zwei in Umfangsrichtung mit Abstand voneinander vorgesehene Axialnuten auf, die beispielsweise der Orientierung des Werkzeughalters in Umfangsrichtung bei Handhabung des Werkzeughalters durch einen Greifer dienen können. In diesem Falle kann die Signalübertragungsvorrichtung in Umfangsrichtung zwischen den Axialnuten aufgenommen sein. Dies ist besonders dann bevorzugt, wenn die beiden Axialnuten in Umfangsrichtung nur einen geringen Abstand aufweisen, etwa nicht mehr als das Doppelte der Umfangserstreckung der breiteren der beiden Axialnuten.

Während die Greiferrille sich hauptsächlich in Umfangsrichtung erstreckt, also in Umfangsrichtung ihre größte Abmessung aufweist, sich aber dennoch sowohl in axiale wie auch in radiale Richtung erstreckt, weisen die genannten Axialnuten zwar auch eine Erstreckung in Umfangsrichtung und in radialer Richtung auf, haben ihre größte Abmessung jedoch in axialer Richtung. Entsprechendes gilt für die oben beschriebene axiale Ausnehmung, in welcher bevorzugt der elektrische Schaltkreis aufgenommen ist.

Dann, wenn der Werkzeughalter sowohl eine wie vorstehend dargestellt ausgebildete Greiferrille als auch wenigstens eine Axialnut aufweist, ist es bevorzugt, wenn beide Axialnuten die Greiferrille kreuzen. In diesem Falle können die Axialnuten zumindest abschnittsweise ohne übermäßige Materialabnahme an einem die Greiferrille axial begrenzenden Radialvorsprung ausgebildet sein.

Die Signalübertragungsvorrichtung ist bevorzugt dann an dem die Greiferrille axial begrenzenden Radialvorsprung angeordnet, wenn sie auch zwischen zwei in Umfangsrichtung benachbarten Axialnuten angeordnet ist. In der Regel ist dann die Umfangserstreckung des zwischen den beiden Axialnuten gelegenen Abschnitts des Radialvorsprungs derart klein, dass der zwischen den beiden Axialnuten gelegene Abschnitt des Radialvorsprungs ohne Funktionsverlust radial etwas kürzer ausgebildet werden kann als jenseits in Umfangsrichtung der beiden Axialnuten. Somit ist die Signalübertragungsvorrichtung in Umfangsrichtung durch die jenseits der Axialnuten größere radiale Erstreckung des Radialvorsprungs geschützt.

Zur Übertragung von Energie oder/und Signalen, insbesondere zwischen Komponenten der Messvorrichtung, können im Werkzeughalter-Grundkörper Leitungskanäle ausgebildet sein, in denen entsprechende Leitungen verlegt sind. Die Leitungskanäle können beispielsweise als Bohrungen ausgebildet sein, die eine in ihnen verlaufende elektrische oder auch optische Leitung vollständig umgeben. Zur Vermeidung unerwünschter Knicke oder Biegungen in den Leitungen ist es vorteilhaft, wenn ein Leitungskanal zur Aufnahme einer Signal oder/und Energie zwischen zwei Komponenten der Messvorrichtung übertragenden Verbindungsleitung einen Winkel mit einem imaginären von der Werkzeughalter-Drehachse ausgehenden Radiusstrahl einschließt. Eine vorteilhafte geringe Kraftwirkung auf die Leitungen bei der bestimmungsgemäßen schnellen Rotation des Werkzeughalters um seine Drehachse kann dann erhalten werden, wenn der Leitungskanal tangential verläuft.

Der erfindungsgemäße Werkzeughalter kann zur Kopplung mit unterschiedlich ausgebildeten Gegenkopplungsvorrichtungen von Maschinenspindeln ausgebildet sein, wobei die Kopplungsformation beliebige bekannte Ausgestaltungen aufweisen kann. Beispielsweise kann die Kopplungsformation einen Hohlschaftkegel oder einen Steilkegel oder/und eine Eingriffsformation für ein Kugelspannsystem oder ein Polygonspannsystem und dergleichen umfassen.

Die vorliegende Erfindung betrifft weiter eine Vorrichtungsanordnung zur Bearbeitung von Werkstücken, umfassend wenigstens einen wie vorstehend beschrieben ausgebildeten Werkzeughalter, eine Werkzeugmaschine mit einer Maschinenspindel, welche zur Kopplung mit dem wenigstens einen Werkzeughalter ausgebildet ist, sowie eine Empfangseinrichtung, welche zum Empfang der von der Signalübertragungsvorrichtung übertragenen Messsignale ausgebildet ist.

Die Empfangseinrichtung kann wie die Signalübertragungsvorrichtung als Sende/- Empfangseinrichtung zur bidirektionalen Signalübertragung ausgebildet sein. Sie wird in der vorliegenden Anmeldung weiter dennoch lediglich als "Empfangseinrichtung" bezeichnet.

Bei bidirektionaler Signalübertragung können die Eigenschaften der Messvorrichtung beispielsweise durch Over-the-Air-Programming verändert werden. Hierdurch kann beispielsweise die Art der Messsignalverarbeitung beeinflusst werden. Es kann ausgewählt werden, ob die Messvorrichtung eine Vorverarbeitung der Signale durchführen soll oder sie direkt an die Empfangseinrichtung weiterleiten soll. Bei Betrieb von mehreren erfindungsgemäßen Werkzeughaltern in geringem Abstand zueinander können sich zur Vermeidung von gegenseitigen Störungen die Signalübertragungsvorrichtungen und die zugeordneten Empfangseinrichtungen aufeinander abstimmen. Dies kann beispielsweise durch Auswahl einer gemeinsamen Übertragungsfrequenz oder eines Erkennungssignals, wie beispielsweise einer Adresse, geschehen. Zur Einsparung von Energie kann die Signalübertragungsvorrichtung in einen Schlafmodus wechseln, wenn sie nicht benötigt wird und von einem Signal der Empfangsvorrichtung bei Bedarf wieder geweckt werden. Weiterhin kann die Signalübertragungsvorrichtung nach Ablauf einer gewissen Zeitspanne periodisch erwachen oder durch ein anderes Signal des elektrischen Schaltkreises oder des wenigstens einen Sensors geweckt werden. Selbstverständlich ist es auch möglich, dass eine Empfangseinrichtung mit mehreren Signalübertragungsvorrichtungen gleichzeitig in Kontakt steht.

Die Vorrichtungsanordnung kann weiter eine mit der Empfangseinrichtung datenübertragungsmäßig verbundene Auswertevorrichtung aufweisen, welche zur Verarbeitung oder/und Auswertung der von der Signalübertragungsvorrichtung übertragenen Messsignale ausgebildet ist. Die Auswertevorrichtung kann gemäß einer möglichen Ausführungsform die einzige signalverarbeitende Vorrichtung der Vorrichtungsanordnung sein. Wie oben bereits beschrieben wurde, können alternativ oder zusätzlich Erfassungssignale eines oder mehrerer Sensoren im Werkzeughalter durch den elektrischen Schaltkreis der Messvorrichtung im Werkzeughalter verarbeitet werden.

Die Werkzeugmaschine umfasst vorteilhafterweise eine Maschinensteuerung, welche Antriebe der Werkzeugmaschine zur Werkstückbearbeitung steuert. Bevorzugt ist die Maschinensteuerung datenübertragungsmäßig mit der Auswertevorrichtung oder/und mit der Empfangseinrichtung verbunden, um erforderlichenfalls abhängig von den von der Signalübertragungsvorrichtung übertragenen Messsignalen - gegebenenfalls nach deren Verarbeitung durch die Auswertevorrichtung - Eingriffe in den Maschinenbetrieb vornehmen zu können.

Weiter kann die Vorrichtungsanordnung einen Werkzeugspeicher mit einer Werkzeugverwaltung aufweisen, wobei die Werkzeugverwaltung datenübertragungsmäßig mit der Empfangseinrichtung oder/und mit der Auswertevorrichtung verbunden ist, um beispielsweise in Abhängigkeit von den von der Signalübertragungsvorrichtung übertragenen Messsignalen - gegebenenfalls nach deren Verarbeitung durch die Auswertevorrichtung - den Werkzeugspeicher zu betreiben. Beispielsweise kann bei Erkennung eines Werkzeugdefektes oder eines Erreichens einer Verschleißgrenze an einem Werkzeug ein gleichwertiges Ersatzwerkzeug bereitgestellt und an die Werkzeugmaschine übergeben werden. Bevorzugt ist daher die Werkzeugverwaltung datenübertragungsmäßig auch mit der Maschinensteuerung verbunden.

Die Auswertevorrichtung, die Maschinensteuerung und die Werkzeugverwaltung können jeweils durch elektronische Datenverarbeitungsvorrichtungen realisiert sein.

Die vorliegende Erfindung wird nachfolgend anhand der beiliegenden Zeichnungen näher erläutert werden. Es stellt grobschematisch dar:
- Figur 1: eine Längsschnittansicht durch eine erste Ausführungsform eines erfindungsgemäßen Werkzeughalters mit einem Schrumpffutter längs einer die Werkzeughalter-Drehachse enthaltenden Schnittebene,
- Figur 2: eine Längsschnittansicht durch eine zweite Ausführungsform eines erfindungsgemäßen Werkzeughalters mit einem Hydrodehnspannfutter längs einer die Werkzeughalter-Drehachse enthaltenden Schnittebene,
- Figur 3: eine Längsschnittansicht durch eine dritte Ausführungsform eines erfindungsgemäßen Werkzeughalters mit einer Messerkopfaufnahme längs einer die Werkzeughalter-Drehachse enthaltenden Schnittebene,
- Figur 4: eine Aufrissansicht des Kopplungsabschnitts und des Handhabungsabschnitts des Werkzeughalters gemäß der ersten Ausführungsform,
- Figur 5: eine Querschnittsansicht in der zur Werkzeug-Drehachse orthogonalen Schnittebene V-V von Figur 4,
- Figur 6: eine perspektivische Längsschnittansicht der Werkzeughalterabschnitte von Figur 4,
- Figur 7: eine Unteransicht eines Werkzeughalters der ersten Ausführungsform mit Blickrichtung längs der Werkzeughalter-Drehachse mit einem auf drei gesonderten starren Schaltkreissubstraten ausgebildeten elektrischen Schaltkreis,
- Figur 8: eine der Perspektive von Figur 7 entsprechende Ansicht des Werkzeughalters der ersten Ausführungsform mit einer alternativen Ausgestaltung des elektrischen Schaltkreises, realisiert auf einem flexiblen und einem starren Schaltkreissubstrat, und
- Figur 9: eine grobschematische Darstellung einer erfindungsgemäßen Vorrichtungsanordnung, welche wenigstens einen erfindungsgemäßen Werkzeughalter verwendet.

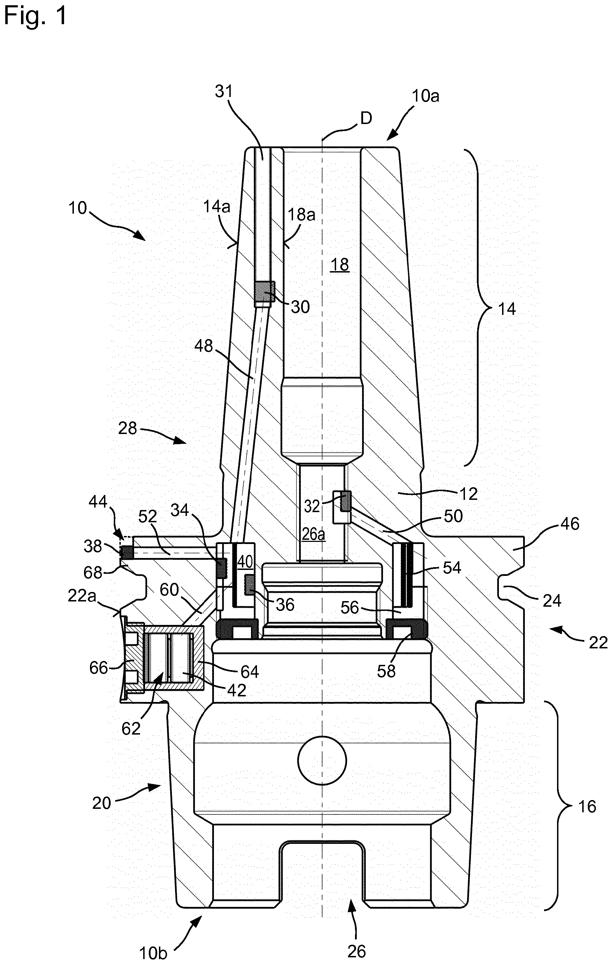

In Figur 1 ist eine erste Ausführungsform eines erfindungsgemäßen Werkzeughalters allgemein mit 10 bezeichnet. Der Werkzeughalter 10 umfasst einen Werkzeughalter-Grundkörper 12, welcher nachfolgend lediglich als Grundkörper 12 bezeichnet ist. Der Grundkörper 12 ist zur Erzielung einer möglichst hohen Steifigkeit einstückig ausgebildet. Er ist in üblicher Weise aus Metall hergestellt. Einstückigkeit im Sinne der vorliegenden Anmeldung liegt auch dann vor, wenn ein Bauteil in einem additiven Verfahren beispielsweise aus Metallpulver generiert wird oder aus mehreren Bauteilen unlösbar, z. B. durch Verschweißen oder Löten, zusammengesetzt ist.

Der Werkzeughalter 10, welcher sich längs einer nachfolgend lediglich als Drehachse D bezeichneten Werkzeughalter-Drehachse D erstreckt, weist an seinem werkzeugseitigen Längsende 10a einen Werkzeugabschnitt 14 und an seinem entgegengesetzten kopplungsseitigen Längsende 10b einen Kopplungsabschnitt 16 auf.

Der Werkzeugabschnitt 14 umfasst eine Werkzeugaufnahmeformation 18 in Gestalt einer Werkzeugaufnahmeausnehmung. In diese Werkzeugaufnahmeausnehmung 18 ist vom werkzeugseitigen Längsende 10a her axial ein Schaft eines in Figur 1 nicht dargestellten Werkzeuges einführbar. Der Werkzeugabschnitt 14 ist in an sich bekannter Weise als Schrumpffutter ausgeführt, in welchem ein Schaft eines in Figur 1 nicht dargestellten Werkzeugs unter Ausnutzung der thermischen Ausdehnung und Schrumpfung des Materials des Grundkörpers 12 gespannt sein kann.

Der Kopplungsabschnitt 16 umfasst in dem in Figur 1 gezeigten Beispiel eine Kopplungsformation 20 in Gestalt eines Hohlschaftkegels oder kurz HSK.

Wie an den weiteren Ausführungsbeispielen gezeigt werden kann, kann der Werkzeugabschnitt 14 auch gemäß einem anderen Spannprinzip ausgebildet sein. Ebenso kann unabhängig davon der Kopplungsabschnitt 16 mit anderer Schaftgestalt ausgebildet sein.

Axial zwischen dem Werkzeugabschnitt 14 und dem Kopplungsabschnitt 16 kann eine Handhabungsformation 22 zur Handhabung des Werkzeughalters 10 beispielsweise durch eine Greifervorrichtung vorgesehen sein. Die Handhabungsformation 22 kann eine in Umfangsrichtung um die Drehachse D umlaufende Greiferrille 24 umfassen.

Der Grundkörper 12 ist in dem in Figur 1 gezeigten Beispiel axial vollständig von einer zentralen Ausnehmung 26 durchsetzt, von welcher die Werkzeugaufnahmeausnehmung 18 einen Axialabschnitt bildet. Der Abschnitt 26a der zentralen Ausnehmung 26 dient unter anderem der Zufuhr von Kühlmittel durch den Werkzeughalter 10 zur Bearbeitungsstelle, an dem das im Werkzeughalter 10 eingespannte Werkzeug mit einem zu bearbeitenden Werkstück in Bearbeitungseingriff steht.

Zur Überwachung des Betriebs des Werkzeughalters während der Werkstückbearbeitung ist der Werkzeughalter 10 mit einer Messvorrichtung 28 versehen. Die Messvorrichtung 28 umfasst im dargestellten Beispiel vier Sensoren 30, 32, 34 und 36, eine Signalübertragungsvorrichtung 38, einen lediglich grobschematisch angedeuteten elektrischen Schaltkreis 40 und eine Energieversorgungsvorrichtung 42 in Gestalt eines Batteriepacks. Alle diese Messvorrichtungskomponenten 30 bis 42 befinden sich bei Betrachtung des Werkzeughalters in der zur Drehachse D orthogonalen Betrachtungsrichtung von Figur 1 innerhalb einer Umrisskontur, die auch ein baugleicher Werkzeughalter 10 ohne Messvorrichtung 28 aufweisen würde.

Da die Signalübertragungsvorrichtung 38 zur Erleichterung der Signalübertragung, beispielsweise durch Funkwellen, an einer Außenseite des Grundkörpers 12 freiliegt, ist die Signalübertragungsvorrichtung 38 in einer Vertiefungsausnehmung 44 des Radialvorsprungs 46 aufgenommen, welcher die Greiferrille 24 zum werkzeugseitigen Längsende 10a hin begrenzt. Diese Vertiefungsausnehmung 44 wurde eigens für die Signalübertragungsvorrichtung 38 ausgebildet. Ohne Messvorrichtung 28 würde der in Umfangsrichtung um die Drehachse D umlaufende Radialvorsprung 46 in Figur 1 links von der Drehachse D spiegelbildlich bezüglich der Drehachse D als Spiegelachse die gleiche Kontur wie in Figur 1 rechts von der Drehachse D aufweisen. Daher liegt auch die Signalübertragungsvorrichtung 38 - obwohl sie frei liegt - innerhalb der Kontur eines baugleichen Werkzeughalters 10 ohne Messvorrichtung 28. Die Kontur des baugleichen Werkzeughalters 10 ohne Messvorrichtung 28 ist im Bereich der Signalübertragungsvorrichtung 38 strichliniert angedeutet.

Der Sensor 30 ist als Werkzeugabschnittssensor im Werkzeugabschnitt 14 radial zwischen einer die Werkzeugaufnahmeausnehmung 18 nach radial außen begrenzenden Wand 18a und einer Außenwand 14a des Werkzeugabschnitts 14 angeordnet. In axialer Richtung liegt er vom werkzeugseitigen Längsende 10a des Werkzeughalters 10 axial nach innen in den Grundkörper 12 hinein versetzt. Der Werkzeugabschnittssensor 30 kann beispielsweise ein Temperatursensor sein, welcher die Temperatur des Werkzeugabschnitts 14 des Werkzeughalters 10 erfasst und ein entsprechendes Erfassungssignal an den elektrischen Schaltkreis 40 liefert. Dadurch wird beispielsweise die Überwachung der korrekten Werkzeugspannung im Schrumpffutter des Werkzeugabschnitts 14 ermöglicht.

Der Werkzeugabschnittssensor 30 ist vom werkzeugseitigen Längsende 10a her in einer Sensoraufnahmeausnehmung 31 aufgenommen. Die Sensoraufnahmeausnehmung 31 kann beispielsweise als Bohrung ausgebildet sein und parallel zur Drehachse D des Werkzeughalters 10 verlaufen.

Elektrische Verbindungsleitungen zwischen den Sensoren 30 bis 36 und dem elektrischen Schaltkreis 40 sind in den vorliegenden Figuren nicht dargestellt. Dargestellt sind jedoch die Leitungskanäle, in denen die elektrischen Verbindungsleitungen verlaufen. Die elektrische Verbindungsleitung zwischen dem Werkzeugabschnittssensor 30 und dem elektrischen Schaltkreis 40 verläuft in dem Leitungskanal 48.

Es wird ausdrücklich darauf hingewiesen, dass die Leitungskanäle in den vorliegend dargestellten Ausführungsbeispielen ohne Rücksicht auf deren Fertigung im Einzelfall lediglich grobschematisch dargestellt sind.

In dem für die Kühlmitteldurchleitung vorgesehenen Abschnitt 26a der zentralen Ausnehmung 26 kann ein weiterer Sensor 32 als Kühlmittelsensor 32 vorgesehen sein. Dieser Kühlmittelsensor 32 kann den Druck oder/und die Temperatur oder/und eine Durchflussmenge pro Zeiteinheit oder/und das Vorliegen eines Kühlmittel-Durchflusses überwachen. Auch der Kühlmittelsensor 32 ist mittels einer nicht dargestellten Verbindungsleitung in dem Leitungskanal 50 mit dem elektrischen Schaltkreis 40 signalübertragungsmäßig verbunden.

Ebenso ist die Signalübertragungsvorrichtung 38 mit dem elektrischen Schaltkreis 40 durch eine nicht dargestellte Verbindungsleitung im Leitungskanal 52 signalübertragungsmäßig verbunden.

Der elektrische Schaltkreis 40 ist in dem in Figur 1 dargestellten Beispiel auf einem flexiblen Schaltkreissubstrat 54 ausgebildet, welches um die Drehachse D gerollt in einer ringförmigen axialen Ausnehmung 56 aufgenommen ist. Auf dem Schaltkreissubstrat 54 sind elektrische Leiterbahnen und elektrische Funktionselemente in an sich bekannter Weise angeordnet. Das Schaltkreissubstrat 54 kann zusätzlich durch Verkleben in der ringförmigen axialen Ausnehmung 56 positionsgesichert sein.

Zum Schutz der in der axialen Ausnehmung 56 aufgenommenen Komponenten der Messvorrichtung 28 kann die axiale Ausnehmung 56 bevorzugt an ihrem einen axialen Längsende mit einem Deckel 58, beispielsweise einem Schraubdeckel 58, lösbar verschlossen sein. Die in der axialen Ausnehmung 56 aufgenommenen Komponenten bleiben daher in einfacher Weise zugänglich und austauschbar. Alternativ kann die axiale Ausnehmung 56 nach Anordnung aller notwendigen Komponenten der Messvorrichtung 28 darin mit einer Gießmasse ausgegossen sein. Gleiches gilt auch für die Leitungskanäle, die in dem Werkzeughalter 10 bzw. im Grundkörper 12 ausgebildet sind.

Die axiale Ausnehmung 56 ist bevorzugt sacklochartig ausgebildet und ist mit Ausnahme der von ihr ausgehenden bzw. in ihr mündenden Leitungskanäle ausschließlich durch Material des Grundkörpers 12 und durch den Deckel 58 begrenzt.

In der ringförmigen axialen Ausnehmung 56 können weitere Sensoren 34 und 36 aufgenommen und signalübertragungsmäßig mit dem elektrischen Schaltkreis 40 verbunden sein. Beispielsweise kann ein Sensor 34 an einer radial äußeren Begrenzungswand und ein weiterer Sensor 36 an einer radial inneren Begrenzungswand angeordnet sein. Die Sensoren 34 und 36 können beispielsweise Beschleunigungssensoren sein oder/und können Verformungssensoren sein, die eine Beschleunigung oder/und eine Verformung des sie tragenden Grundkörpers 12 an ihrem jeweiligen Anbringungsort erfassen. Dadurch können Vibrationen und Unwuchten des Werkzeughalters 10 ebenso wie auf den Werkzeughalter 10 von der Bearbeitungsseite her einwirkende Kräfte und Momente erfasst werden.

Die von den Sensoren 30 bis 36 gelieferten Erfassungssignale können entweder von dem elektrischen Schaltkreis 40 weiterverarbeitet werden oder können als Rohdaten über die Signalübertragungsvorrichtung 38 zu einer außerhalb des Werkzeughalters 10 vorgesehenen Empfangseinrichtungen einer daran angeschlossenen Auswertevorrichtung übertragen werden.

Als Energieversorgung ist in dem in Figur 1 gezeigten Beispiel ein Batteriepack 42 dargestellt, welcher mit einer durch den Leitungskanal 60 geführten, nicht dargestellten Energieversorgungsleitung mit dem elektrischen Schaltkreis 40 gekoppelt ist. Die bisher genannten Leitungskanäle 48, 50 und 52 dienen neben der Signalübertragung auch der Energieübertragung zwischen der Signalübertragungsvorrichtung 38 bzw. den Sensoren 30 bis 34 und dem elektrischen Schaltkreis 40 bzw. dem Batteriepack 42.

Der Batteriepack 42 ist in einer sich von der Außenseite 22a der Handhabungsformation 22 orthogonal zur Drehachse D nach radial innen erstreckenden radialen Ausnehmung 62 aufgenommen, und zwar zur Vermeidung von Kurzschlüssen zwischen dem Batteriepack 42 und dem elektrisch leitfähigen Grundkörper 12 aus Metall unter Zwischenanordnung einer den Batteriepack 42 vom Grundkörper 12 trennenden Isolationsformation 64. Die radiale Ausnehmung 62 kann zum Schutz und zur Positionssicherung des Batteriepacks 42 wiederum verschlossen sein, bevorzugt lösbar verschlossen sein, beispielsweise wiederum durch einen Schraubdeckel 66.

Zwischen der Signalübertragungsvorrichtung 38 und der axial benachbarten Greiferrille 24 ist von dem Radialvorsprung 46 ein Steg 68 vorhanden, welcher die Signalübertragungsvorrichtung 38 von der Greiferrille 24 trennt. Der Steg 68 dient wie der Radialvorsprung 46 insgesamt der Beflankung der Greiferrille 24 zum werkzeugseitigen Längsende 10a des Werkzeughalters 10 hin. Der Steg 68 schirmt somit die Signalübertragungsvorrichtung 38 während der Handhabung des Werkzeughalters 10 durch einen Greifer vor äußeren Einflüssen durch den Greifer ab. Gleichzeitig bleibt die Kontur der Greiferrille 24 längs des Umfangs im Wesentlichen ungestört.

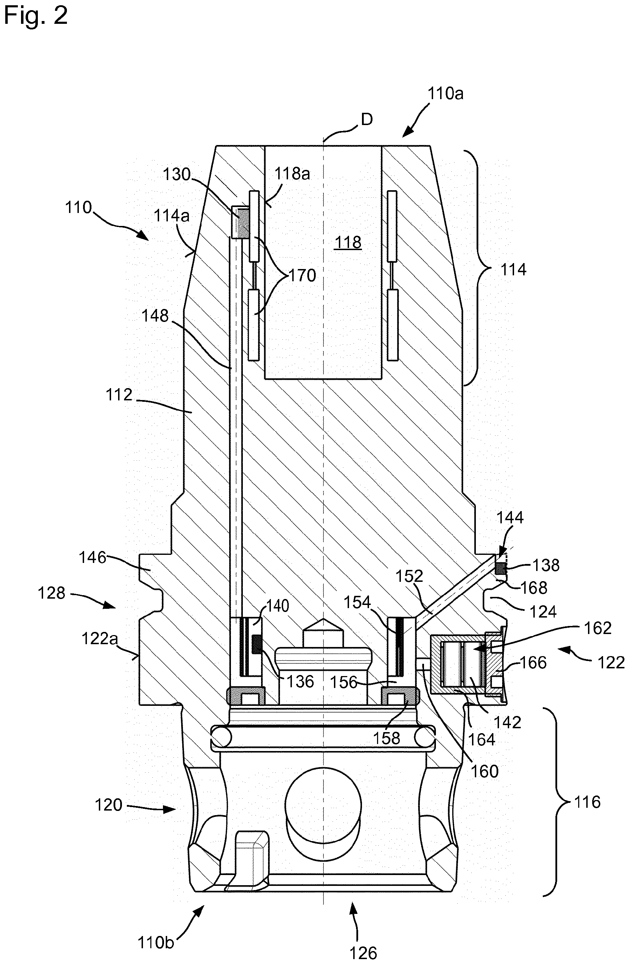

In Figur 2 ist ein zweites Ausführungsbeispiel eines erfindungsgemäßen Werkzeughalters dargestellt. Gleiche und funktionsgleiche Bauteile und Bauteilabschnitte sind mit gleichen Bezugszeichen versehen wie die in Figur 1 dargestellte erste Ausführungsform, jedoch erhöht um die Zahl 100. Die zweite Ausführungsform wird nachfolgend nur insofern erläutert werden, als sie sich von der ersten Ausführung in Figur 1 unterscheidet, auf deren Beschreibung ansonsten auch zur Erläuterung der zweiten Ausführungsform verwiesen wird.

Der in Figur 2 dargestellte Werkzeughalter 110 weist als Werkzeugaufnahmeformation 118 ein Hydrodehnspannfutter auf, bei welchem die lichte Weite der von der Werkzeugaufnahmeformation 118 gebildeten Werkzeugaufnahmeausnehmung durch Einleiten einer Druckflüssigkeit in Druckkammern 170 verändert werden kann.

Der Werkzeugabschnittssensor 130 ist in dem Ausführungsbeispiel von Figur 2 als Drucksensor ausgebildet, der zur Erfassung des Spanndrucks in den Druckkammern 170 vorgesehen ist. Hierzu kann ein Erfassungsbereich des Werkzeugabschnittssensors 130 einen Teil der Wand der Druckkammer 170 bilden.

In dem in Figur 2 gezeigten Ausführungsbeispiel durchsetzt die zentrale Ausnehmung 126 den Grundkörper 112 nicht, wenngleich die zentrale Ausnehmung 126 auch den Grundkörper 112 in Längsrichtung durchsetzend ausgebildet sein könnte.

Der Kopplungsabschnitt 116 des Werkzeughalters 110 ist mit einer Formation für ein Kugelspannsystem ausgebildet.

Der Grundkörper 112 der zweiten Ausführungsform kann im Gegensatz zu seiner lediglich grobschematischen Darstellung in Figur 2 Teilungen aufweisen. Beispielsweise kann die die Werkzeugaufnahmeausnehmung 118 nach radial außen begrenzende Wandung 118a an einem gesonderten Einsatzbauteil ausgebildet sein, welches unter Vereinigung mit dem Grundkörper 112 die Druckkammern 170 bildet.

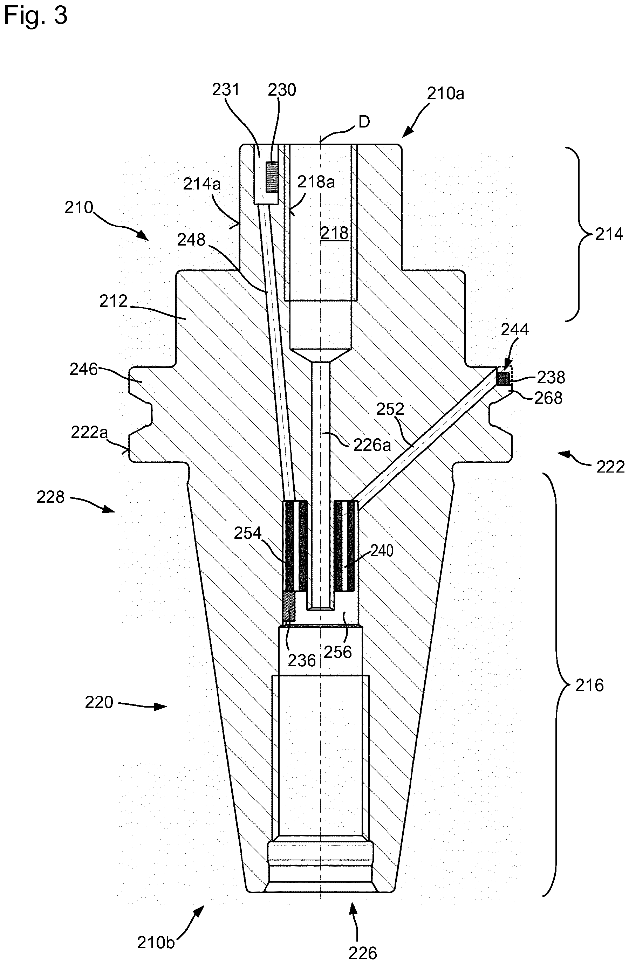

In Figur 3 ist ein drittes Ausführungsbeispiel eines erfindungsgemäßen Werkzeughalters dargestellt. Gleiche und funktionsgleiche Bauteile und Bauteilabschnitte sind mit gleichen Bezugszeichen versehen wie die in Figur 1 dargestellte erste Ausführungsform, jedoch erhöht um die Zahl 200. Die dritte Ausführungsform wird nachfolgend nur insofern erläutert werden, als sie sich von der ersten Ausführungsform von Figur 1 unterscheidet, auf deren Beschreibung ansonsten auch zur Erläuterung der dritten Ausführungsform verwiesen wird.

Der Werkzeughalter 210 von Figur 3 weist einen Werkzeugabschnitt 214 auf, welcher zur Aufnahme eines Messerkopfes ausgebildet ist. Hierzu weist der Werkzeugabschnitt 114 eine Werkzeugaufnahmeformation 218 in Form eines Werkzeugaufnahmezapfens mit Aufnahmeausnehmung und Innengewinde auf.

Der Kopplungsabschnitt 216 weist eine Kopplungsformation 220 in Form eines Steilkegels oder kurz SK auf.

Die axiale Ausnehmung 256 zur Aufnahme des elektrischen Schaltkreises 240 auf dem flexiblen Schaltkreissubstrat 254 ist in dem in Figur 3 gezeigten Ausführungsbeispiel zum kopplungsseitigen Längsende 210b hin offen gelassen. Auch hier kann jedoch ein lösbarer Deckel zum Verschluss der axialen Ausnehmung 256 vorgesehen sein.

Wenngleich es in Figur 3 nicht dargestellt ist, weist auch der Werkzeughalter 210 von Figur 3 eine Energieversorgungsvorrichtung auf. Diese kann wie in den zuvor gezeigten Ausführungsformen ein Batteriepack oder ein Akkumulatorenpack sein. Sie kann auch eine Induktionsspule zur induktiven Übertragung elektrischer Energie umfassen.

Der Werkzeugabschnittssensor 230 kann beispielsweise ein Beschleunigungssensor sein, um etwaige Vibrationen des Werkzeugabschnitts 214 des Werkzeughalters 210 zu erfassen und daraus auf einen Werkzeugverschleiß oder auf nicht korrekt gewählte Betriebsparameter schließen zu können.

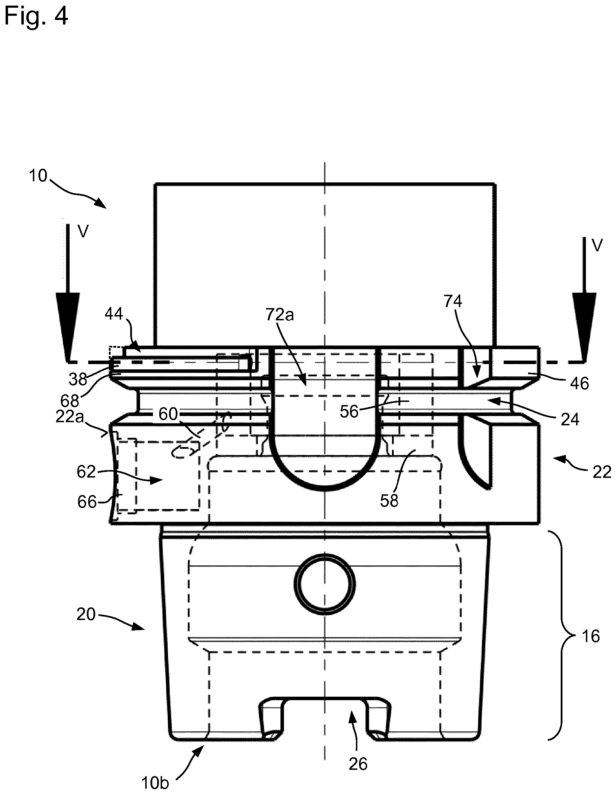

In den Figuren 4 bis 6 ist der Werkzeughalter 10 der ersten Ausführungsform in unterschiedlichen Darstellungen gezeigt. Zur Vereinfachung der Darstellung ist der in den Figuren 4 bis 6 nicht interessierende Werkzeugabschnitt lediglich als Zylinder dargestellt. Der Zylinder kann durch eine der werkzeugseitigen Ausgestaltungen der Figuren 1 bis 3 ersetzt gedacht werden.

Die Figur 4 zeigt eine Aufrissansicht des Kopplungsabschnitts 16 und des Handhabungsabschnitts 22 des Werkzeughalters 10 im ungeschnittenen Zustand, wobei die innere Gestalt des Werkzeughalters 10 in den genannten Abschnitten 16 und 22 strichliniert dargestellt und zum Teil mit Bezugszeichen versehen ist.

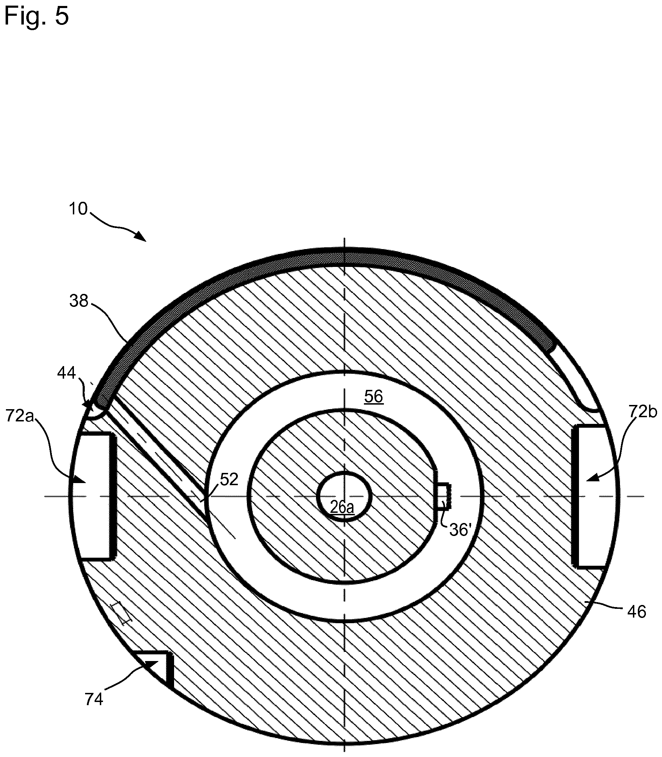

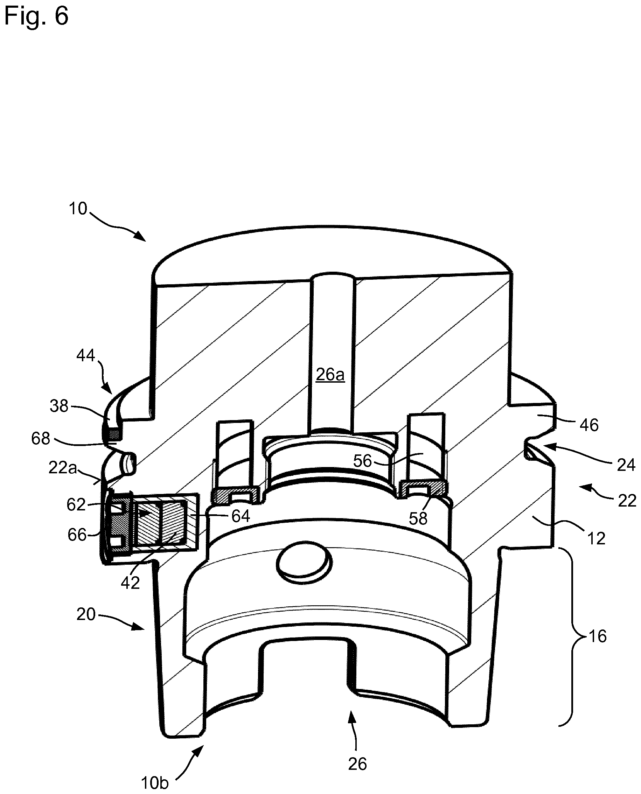

Die Figur 5 zeigt eine Schnittansicht in der zur Drehachse D orthogonalen Schnittachse V-V von Figur 4. Die Figur 6 zeigt eine perspektivische Längsschnittansicht durch den in den Figuren 4 und 6 vereinfacht dargestellten Werkzeughalter 10.

Zunächst zeigen die Figuren 4 bis 6, wie sich die Signalübertragungsvorrichtung 38 längs eines signifikanten Teils des Umfangs des Werkzeughalters 10 erstrecken kann. Im dargestellten Beispiel erstreckt sich die Signalübertragungsvorrichtung 38 über etwa 125°, das ist etwas mehr als 1/3 des gesamten Umfangs des Radialvorsprungs 46 bzw. der Handhabungsformation 22. Die Vertiefung 44, in der die Signalübertragungsvorrichtung 38 aufgenommen ist, kann sich noch über einen größeren Umfangsabschnitt als die darin aufgenommene Signalübertragungsvorrichtung 38 erstrecken. Beispielsweise kann sich die Vertiefung 44 zwischen zwei sich diametral gegenüberliegenden Axialnuten 72a und 72b erstrecken, die bei der Handhabung des Werkzeughalters 10 durch einen Greifer eine Rolle spielen.

In den Figuren 4 und 5 ist überdies eine weitere Axialnut 74 gezeigt, die in Umfangsrichtung kürzer als die zuvor genannten Axialnuten 72a und 72b ausgebildet ist. Die Axialnut 74 wird als Indexiernut 74 bei der Handhabung des Werkzeughalters 10 verwendet, um eine definierte Orientierung des Werkzeughalters 10 um seine Drehachse D automatisiert erkennen zu können. Die Axialnuten 72a und 72b sind in Umfangsrichtung unterschiedlich bemessen. Genauer ist die Axialnut 72a in Umfangsrichtung kürzer ausgebildet als die ihr gegenüberliegende Axialnut 72b.

Die Axialnuten 72 und 74 kreuzen die Greiferrille 24.

In Figur 5 ist weiter zu erkennen, wie der die axiale Ausnehmung 56 mit der Vertiefung 44 verbindende Leitungskanal 52 tangential bezüglich der axialen Ausnehmung 56 angeordnet ist. Hierdurch wird ein unerwünschtes Knicken von Verbindungsleitungen zwischen dem in der axialen Ausnehmung 56 angeordneten elektrischen Schaltkreis und der in der Vertiefung 44 angeordneten Signalübertragungsvorrichtung 38 weitestgehend vermieden. Des Weiteren vermindert der tangentiale Verlauf des Leitungskanales 52 die Zugkraft, die auf die Verbindungsleitungen bei Rotation des Werkzeughalters 10 um seine Drehachse D infolge Zentrifugalkraft wirkt, da die Zentrifugalkraft zum großen Teil von der Wand des Leitungskanales 52 aufgenommen wird. In Figur 1 ist der Leitungskanal 52 zur Vereinfachung der Darstellung in die die Drehachse D enthaltende Schnittebene gedreht.

Weiter ist in Figur 5 ein alternativer an der radial inneren Begrenzungswand der axialen Ausnehmung 56 angeordneter Körpersensor 36' dargestellt. Dieser liegt in Figur 1 hinter der Schnittebene und ist durch das Bauteil verdeckt. Der Körpersensor 36' ist an einer Abflachung der im Wesentlichen zylindrisch geformten Innenwand der Ausnehmung 56 angebracht, so dass eine guter Kontakt des Sensors mit der Unterlage gewährleistet ist.

Zur Beschreibung der Fig. 6 wird auf die obige Beschreibung von Fig. 1 verwiesen.

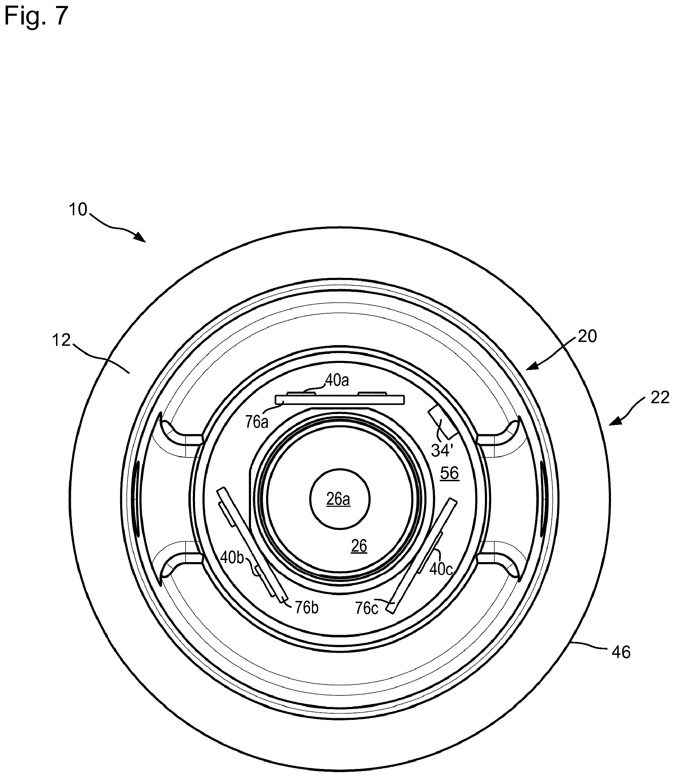

In Figur 7 ist eine Unteransicht des Werkzeughalters 10 der Figuren 1 und 4 bis 6 längs der Drehachse D dargestellt. Der Schraubdeckel 58 ist der Übersichtlichkeit halber weggelassen. Man blickt daher direkt in die ringförmige axiale Ausnehmung 56.

Der Werkzeughalter 10 von Figur 7 weist eine alternative Ausgestaltung des elektrischen Schaltkreises 40 auf. Dieser ist in drei gesondert voneinander ausgebildeten, jedoch signalübertragungsmäßig miteinander verbundenen Teil-Schaltkreisen 40a bis 40c realisiert. Jeder Teil-Schaltkreis 40a bis 40c ist auf einem eigenen, starren Schaltkreissubstrat 76a, 76b und 76c ausgebildet. Die starren Schaltkreissubstrate 76a, 76b und 76c sind um die Drehachse D derart verteilt angeordnet, dass eine Trägheitsachse der Gesamtanordnung der starren Schaltkreissubstrate 76a, 76b und 76c mit den darauf ausgebildeten Teil-Schaltkreisen 40a bis 40c mit der Drehachse D im Wesentlichen zusammenfällt. Dies vermindert eine durch die Anordnung der starren Schaltkreissubstrate 76a, 76b und 76c zu besorgende Unwucht.

Im dargestellten Beispiel sind die starren Schaltkreissubstrate 76a, 76b und 76c im Wesentlichen parallel zur Drehachse D und in Umfangsrichtung um die Drehachse D in etwa äquidistant mit Abstand voneinander angeordnet.

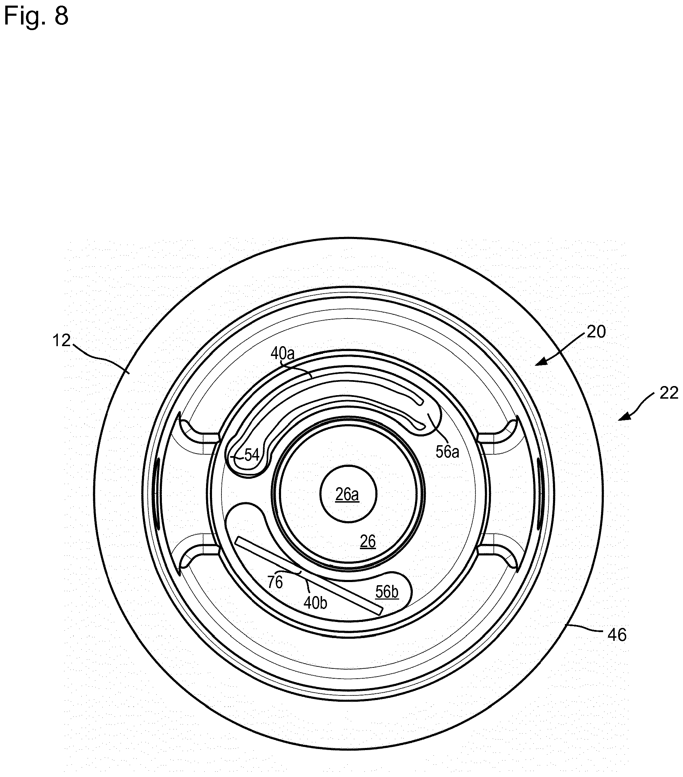

In Figur 8 ist eine weitere alternative Ausführungsform der axialen Ausnehmung 56 und des darin vorgesehenen elektrischen Schaltkreises gezeigt.

Wiederum ist der elektrische Schaltkreis in zwei Teil-Schaltkreise 40a und 40b aufgeteilt realisiert, welche auf gesonderten Schaltkreissubstraten angeordnet und signalübertragungsmäßig miteinander verbunden sind.

Der Teil-Schaltkreis 40a ist auf einem flexiblen Schaltkreissubstrat 54 ausgebildet, der Teilschaltkreis 40b hingegen auf einem starren Schaltkreissubstrat 76. In dem in Figur 8 gezeigten Beispiel ist für jedes Schaltkreissubstrat eine gesonderte axiale Teil-Ausnehmung 56a und 56b vorgesehen, in welcher jeweils genau ein Schaltkreissubstrat angeordnet ist, nämlich das Schaltkreissubstrat 54 in der Teil-Ausnehmung 56a und das Schaltkreissubstrat 76 in der Teil-Ausnehmung 56b. Die Teil-Ausnehmungen 56a und 56b erstrecken sich in axialer Richtung sowie teilzylindrisch um einen Umfangsabschnitt des Grundkörpers 12 um die Drehachse D herum. Der Schaltkreis 40a ist in diesem Ausführungsbeispiel 2-lagig in die Teil-Ausnehmung 56a eingelegt. Ebenso kann jedoch der Schaltkreis einlagig oder mit mehr als zwei Lagen in die Teil-Ausnehmung 56a eingelegt sein. Um das zwar flexible, aber nur begrenzt verformbare Schaltkreissubstrat 54 nicht zu stark zu knicken verfügt die Teil-Ausnehmung 56a an ihrem einen Ende über eine Erweiterung, in der das Schaltkreissubstrat 54 in einem ausreichend großen Biegeradius gebogen werden kann.

Es versteht sich, dass der Werkzeughalter 10 über beliebig viele Teil-Ausnehmungen verfügen kann, die alle mit Teil-Schaltkreisen aus starrem Schaltkreissubstrat oder alle aus flexiblem Schaltkreissubstrat oder gemischt aus starrem und flexiblem Schaltkreissubstrat bestückt sind. Bevorzugt sind Teil-Ausnehmungen der axialen Ausnehmung 56 zur Vermeidung oder wenigstens Verringerung von unerwünschten Unwuchten gleich ausgebildet und symmetrisch um die Drehachse D herum angeordnet. In diesem Falle wären die Teil-Ausnehmungen 56a und 56b axial gleich tief und mit gleicher Abmessung in Umfangsrichtung ausgebildet und einander diametral gegenüberliegend angeordnet.

Auch die starren Schaltkreissubstrate 76 bzw. Teil-Schaltkreissubstrate 76a, 76b und 76c sind bevorzugt in ihren jeweiligen Ausnehmungen, in denen sie angeordnet sind, fixiert, beispielsweise durch Verklebung.

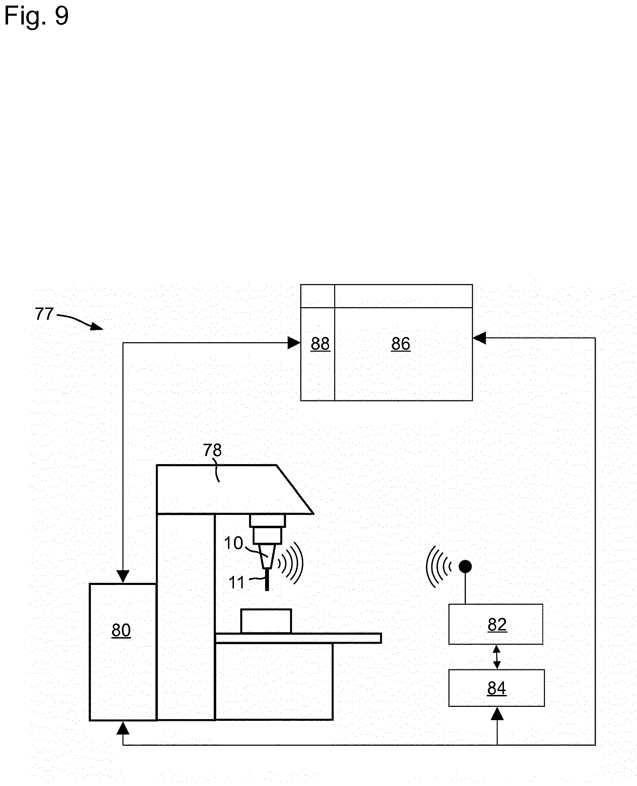

In Figur 9 ist beispielhaft eine Vorrichtungsanordnung 77 dargestellt, welche den zuvor beschriebenen erfindungsgemäßen Werkzeughalter 10 (und ebenso die alternativen Werkzeughalter 110 bzw. 210) nutzt.

Die Vorrichtungsanordnung 77 umfasst eine Werkzeugmaschine 78, beispielsweise eine Mehrachsen-Bohr- und Fräsmaschine 78, in welcher der Werkzeughalter 10 mit einem darin gespannten Werkzeug 11 zur spanenden Bearbeitung aufgenommen ist. Die Werkzeugmaschine 78 weist in an sich bekannter Weise eine Maschinensteuerung 80 auf, welche eine Positions- und Geschwindigkeitssteuerung des Tool Center Points (TCP) des Werkzeugs 11 ermöglicht.

Die Vorrichtungsanordnung 77 umfasst weiter eine Empfangseinrichtung 82, welche zur Signalübertragung mit der Signalübertragungsvorrichtung 38 ausgebildet ist. Bevorzugt ist die Empfangseinrichtung 82 als Sende/Empfangseinrichtung 82 zur bidirektionalen Signalübertragung mit der Signalübertragungsvorrichtung 38 ausgebildet.

Mit der Empfangseinrichtung 82 datenübertragungsmäßig verbunden kann eine Auswertevorrichtung 84 vorgesehen sein, welche die durch die Empfangseinrichtung 82 von der Signalübertragungsvorrichtung 38 des Werkzeughalters 10 empfangenen Daten verarbeitet. Hierzu kann die Auswertevorrichtung 84 einen Speicher aufweisen, in dem Daten und Programme gespeichert sind.

Um auf Grundlage der von den Sensoren des Werkzeughalters 10 erfassten Daten nach deren Verarbeitung durch die Auswertevorrichtung 84 Steuerungseingriffe an der Werkzeugmaschine 78 vornehmen zu können, ist die Maschinensteuerung 80 vorteilhafterweise datenübertragungsmäßig mit der Auswertevorrichtung 84 verbunden.

Weiter kann die Vorrichtungsanordnung 77 einen Werkzeugspeicher 86 mit einer Werkzeugspeicherverwaltung 88 aufweisen. Der Werkzeugspeicher 86 zusammen mit der Werkzeugspeicherverwaltung 88 können sowohl mit der Maschinensteuerung 80 als auch mit der Auswertevorrichtung 84 verbunden sein, sodass auch in der Werkzeugspeicherverwaltung 88 die von den Sensoren des Werkzeughalters 10 erfassten Daten nutzbar sind. So kann beispielsweise auf Grundlage der von den Sensoren des Werkzeughalters 10 erfassten Größen dann, wenn von der Auswertevorrichtung 84 auf das Erreichen einer Verschleißgrenze des Werkzeugs 11 geschlossen wird, am Werkzeugspeicher 86 ein Äquivalent des Austauschwerkzeugs 11' bereitgestellt und anstelle des verschlissenen Werkzeugs 11 in der Werkzeugmaschine 78 gespannt werden.

Grundsätzlich kann bereits eine Verarbeitung der Erfassungssignale der Sensoren durch den zuvor beschriebenen elektrischen Schaltkreis 40 im Werkzeughalter erfolgen. Jedoch kann durch eine externe Auswertevorrichtung 84 außerhalb des Werkzeughalters 10 zum einen eine wesentlich höhere Datenverarbeitungskapazität bereitgestellt und zum anderen die Größe des elektrischen Schaltkreises 40 im Werkzeughalter verringert werden.

## Patentansprüche

1. Werkzeughalter (10; 110; 210), welcher zur Rotation um eine eine axiale Richtung definierende Werkzeughalter-Drehachse (D) ausgebildet ist und welcher an seinem einen axialen Längsende (10a; 110a; 210a) einen Werkzeugabschnitt (14; 114; 214) mit einer Werkzeugaufnahmeformation (18; 118; 218) zur Aufnahme eines Werkzeugs (11) und an seinem anderen axialen Längsende (10b; 110b; 210b) einen Kopplungsabschnitt (16; 116; 216) mit einer Kopplungsformation (20; 120; 220) zur Drehmoment übertragenden Kopplung mit einer Maschinenspindel einer Werkzeugmaschine (78) aufweist, wobei an dem Werkzeughalter (10; 110; 210) eine Messvorrichtung (28; 128; 228) zur Erfassung von den Betrieb des Werkzeughalters (10; 110; 210) betreffenden Daten vorgesehen ist, welche wenigstens die folgenden Komponenten umfasst:
- wenigstens einen ein Erfassungssignal liefernden Sensor (30, 32, 34, 36; 130, 136; 230, 236),
- eine Signalübertragungsvorrichtung (38; 138; 238) zur Übertragung eines Messsignals von der Messvorrichtung (28; 128; 228) zu einer gesondert vom Werkzeughalter (10; 110; 210) ausgebildeten und entfernt von diesem angeordneten Empfangsvorrichtung (82),
- einen mit dem Sensor (30, 32, 34, 36; 130, 136; 230, 236) und der Signalübertragungsvorrichtung (38; 138; 238) signalübertragungsmäßig verbundenen elektrischen Schaltkreis (40; 40a, 40b, 40c) zur Ansteuerung des Sensors (30, 32, 34, 36; 130, 136; 230, 236) oder/und zur Verarbeitung des Erfassungssignals des Sensors (30, 32, 34, 36; 130, 136; 230, 236) oder/und zur Ansteuerung der Signalübertragungsvorrichtung (38; 138; 238), und
- eine Energieversorgungsvorrichtung (42; 142), welche energieübertragungsmäßig mit der Signalübertragungsvorrichtung (38; 138; 238) und dem elektrischen Schaltkreis (40; 40a, 40b, 40c) verbunden ist,
wobei der Werkzeughalter (10; 110; 210) einen Werkzeughalter-Grundkörper (12; 112; 212) aufweist, welcher den Werkzeugabschnitt (14; 114; 214) oder/und den Kopplungsabschnitt (16; 116; 216) aufweist, wobei wenigstens eine Komponente aus Sensor (30, 32, 34, 36; 130, 136; 230, 236), elektrischem Schaltkreis (40; 40a, 40b, 40c) und Energieversorgungsvorrichtung (42; 142) in einer Ausnehmung (56, 62; 56a, 56b; 156, 162; 256) im Inneren des Werkzeughalter-Grundkörpers (12; 112; 212) aufgenommen ist,
**dadurch gekennzeichnet, dass** wenigstens ein Sensor als Werkzeugabschnittssensor (30; 130; 230) im Werkzeugabschnitt (14; 114; 214) des Werkzeughalter-Grundkörpers (12; 112; 212) radial zwischen einer radial inneren Wand (18a; 118a; 218a) einer Werkzeugaufnahmeausnehmung (18; 118; 218) der Werkzeugaufnahmeformation (18; 118; 218) und einer radial äußeren Außenwand (14a; 114a; 214a) des Werkzeughalter-Grundkörpers (12; 112; 212) angeordnet ist.

2. Werkzeughalter (10; 110; 210) mit Messvorrichtung (28; 128; 228) nach Anspruch 1,
**dadurch gekennzeichnet, dass** der Werkzeughalter (10; 110; 210) einstückig ausgebildet ist und sowohl den Werkzeugabschnitt (14; 114; 214) als auch den Kopplungsabschnitt (16; 116; 216) aufweist.

3. Werkzeughalter (10; 110; 210) mit Messvorrichtung (28; 128; 228) nach Anspruch 1 oder 2 oder nach dem Oberbegriff von Anspruch 1,
**dadurch gekennzeichnet, dass** der Werkzeughalter (10; 110; 210) mit Messvorrichtung (28; 128; 228) bei Betrachtung orthogonal zur Werkzeughalter-Drehachse (D) in wenigstens zwei unterschiedlichen Betrachtungsrichtungen, welche um 90° zueinander um die Werkzeughalter-Drehachse (D) verdreht sind, vorzugsweise in drei unterschiedlichen Betrachtungsrichtungen, von welchen jeweils zwei benachbarte Betrachtungsrichtungen um 120° zueinander um die Werkzeughalter-Drehachse (D) verdreht sind, besonders bevorzugt in jeder beliebigen zur Werkzeughalter-Drehachse (D) orthogonalen Betrachtungsrichtung, die gleiche Außenkontur aufweist wie ein zerspanungstechnisch funktionsidentischer Werkzeughalter ohne Messvorrichtung.

4. Werkzeughalter (10; 110; 210) mit Messvorrichtung (28; 128; 228) nach einem der vorhergehenden Ansprüche,
**dadurch gekennzeichnet, dass** der Werkzeughalter-Grundkörper (12; 112; 212) eine axiale Ausnehmung (56; 56a, 56b; 156; 256) aufweist, vorzugsweise eine sich vollständig um die Werkzeughalter-Drehachse (D) herum erstreckende ringförmige Ausnehmung (56; 156; 256) aufweist, in welcher der elektrische Schaltkreis (40; 40a, 40b, 40c) aufgenommen ist.

5. Werkzeughalter (10) mit Messvorrichtung (28) nach Anspruch 4,
**dadurch gekennzeichnet, dass** der Werkzeughalter-Grundkörper (12) wenigstens zwei axiale Ausnehmungen (56a, 56b) aufweist, in welchen jeweils ein Bauteil (54, 76) des elektrischen Schaltkreises (40; 40a, 40b, 40c) aufgenommen ist.

6. Werkzeughalter (10) mit Messvorrichtung (28) nach Anspruch 4 oder 5,
**dadurch gekennzeichnet, dass** der elektrische Schaltkreis (40; 40a, 40b, 40c) mehrere voneinander gesonderte Leiterbahnen und elektrische Komponenten tragende starre Schaltkreissubstrate (76a, 76b, 76c) umfasst, welche bevorzugt in Umfangsrichtung um die Werkzeughalter-Drehachse (D) in der axialen Ausnehmung (56) verteilt angeordnet sind, besonders bevorzugt derart verteilt, dass eine Trägheitsachse der Gesamtheit der Schaltkreissubstrate im Wesentlichen mit der Werkzeughalter-Drehachse (D) zusammenfällt, oder/und dass der elektrische Schaltkreis (40; 40a, 40b, 40c) ein Leiterbahnen und elektrische Komponenten tragendes flexibles Schaltkreissubstrat (54; 154, 254) umfasst, welches um die Werkzeughalter-Drehachse (D) verformt, insbesondere gerollt, in der axialen Ausnehmung (56; 156; 256) angeordnet ist.

7. Werkzeughalter (10; 110) mit Messvorrichtung (28; 128) nach einem der Ansprüche 4 bis 6,
**dadurch gekennzeichnet, dass** die wenigstens eine axiale Ausnehmung (56; 156) unter Abgrenzung eines Aufnahmeraumes mit einem Deckel (58; 158), insbesondere Schraubdeckel (58; 158), verschließbar ist.

8. Werkzeughalter (10; 110; 210) mit Messvorrichtung (28; 128; 228) nach einem der vorhergehenden Ansprüche
**dadurch gekennzeichnet, dass** die Werkzeugaufnahmeformation (18; 118; 218) ein Schrumpffutter oder ein Hydrodehnspannfutter oder eine Messerkopfaufnahme oder ein Spannzangenfutter oder ein Kraftspannfutter ist.

9. Werkzeughalter (110) mit Messvorrichtung (128) nach Anspruch 8,
**dadurch gekennzeichnet, dass** die Werkzeugaufnahmeformation (118) ein Hydrodehnspannfutter ist und dass der Werkzeugabschnittssensor (130) in einer Wandung einer Druckkammer (170) des Hydrodehnspannfutters angeordnet und zur mittelbaren oder unmittelbaren Erfassung des Spanndrucks in der Druckkammer (170) ausgebildet ist.

10. Werkzeughalter (10; 110; 210) mit Messvorrichtung (28; 128; 228) nach einem der vorhergehenden Ansprüche,
**dadurch gekennzeichnet, dass** der wenigstens eine Werkzeugabschnittssensor (30; 130; 230) ein Temperatursensor oder/und ein Verformungssensor oder/und ein Beschleunigungssensor oder/und ein Drucksensor ist.

11. Werkzeughalter (10) mit Messvorrichtung (28) nach einem der vorhergehenden Ansprüche,
**dadurch gekennzeichnet, dass** wenigstens ein Sensor als Kühlmittelsensor (32) in einem Kühlmittelkanal (26a) zur Durchleitung eines Kühl- oder/und Schmiermittels, vorzugsweise in einem zentralen Kühlmittelkanal (26a), im Werkzeughalter-Grundkörper (12) angeordnet ist, wobei der Kühlmittelsensor (32) bevorzugt ein Temperatursensor oder/und ein Drucksensor oder/und ein Strömungssensor ist.

12. Werkzeughalter (10; 110; 210) mit Messvorrichtung (28; 128; 228) nach einem der vorhergehenden Ansprüche, unter Einbeziehung des Anspruchs 4 oder 5, **dadurch gekennzeichnet, dass** wenigstens ein Sensor als Körpersensor (34, 36; 136; 236) in der axialen Ausnehmung (56; 156; 256) angeordnet ist, vorzugsweise an einer die axiale Ausnehmung (56; 156; 256) nach radial innen begrenzenden Innenwand oder/und an einer die axiale Ausnehmung (56; 156; 256) nach radial außen begrenzenden Außenwand, wobei der Körpersensor (34, 36; 136; 236) bevorzugt ein Temperatursensor oder/und ein Verformungssensor oder/und ein Beschleunigungssensor ist.

13. Werkzeughalter (10; 110; 210) mit Messvorrichtung (28; 128; 228) nach einem der vorhergehenden Ansprüche,
**dadurch gekennzeichnet, dass** eine Mehrzahl gleichartiger Sensoren zur Erfassung einer ersten Betriebsgröße in Umfangsrichtung um die Werkzeughalter-Drehachse (D) verteilt angeordnet sind, wobei die Messvorrichtung (28; 128; 228) weiter eine Signalauswertungsvorrichtung umfasst, welche dazu ausgebildet ist, durch Vergleich der Erfassungssignale der Mehrzahl von Sensoren mittelbar auf eine von den Sensoren nicht unmittelbar erfasste zweite Betriebsgröße zu schließen.

14. Vorrichtungsanordnung (77) zur Bearbeitung von Werkstücken, umfassend wenigstens einen Werkzeughalter (10) nach einem der vorhergehenden Ansprüche, eine Werkzeugmaschine (78) mit einer Maschinenspindel, welche zur Kopplung mit dem wenigstens einen Werkzeughalter (10) ausgebildet ist, sowie eine Empfangseinrichtung (82), welche zum Empfang der von der Signalübertragungsvorrichtung (38) übertragenen Messsignale ausgebildet ist.

## Claims

1. Tool holder (10; 110; 210) which is configured to rotate about a tool holder rotation axis (D) that defines an axial direction, and which on its one axial longitudinal end (10a; 110a; 210a) has a tool portion (14; 114; 214) having a tool receptacle formation (18; 118; 218) for receiving a tool (11), and on its other axial longitudinal end (10b; 110b; 210b) has a coupling portion (16; 116; 216) having a coupling formation (20; 120; 220) for torque-transmitting coupling to a machine spindle of a machine tool (78), wherein provided on the tool holder (10; 110; 210) is a measuring device (28; 128; 228) for detecting data pertaining to the operation of the tool holder (10; 110; 210), which measuring device (28; 128; 228) comprises at least the following components:
- at least one sensor (30, 32, 34, 36; 130, 136; 230, 236) which supplies a detection signal;
- a signal transmission device (38; 138; 238) for transmitting a measurement signal from the measuring device (28; 128, 228) to a receiver device (82) which is configured separately from the tool holder (10; 110; 210) and disposed remotely from the latter;
- an electric circuit (40; 40a, 40b, 40c) for actuating the sensor (30, 32, 34, 36; 130, 136; 230, 236) and/or for processing the detection signal of the sensor (30, 32, 34, 36; 130, 136; 230, 236) and/or for actuating the signal transmission device (38; 138; 238), which for transmitting signals is connected to the sensor (30, 32, 34, 36; 130, 136; 230, 236) and the signal transmission device (38; 138; 238); and
- a power supply device (42; 142) which for transmitting power is connected to the signal transmission device (38; 138; 238) and the electric circuit (40; 40a, 40b, 40c);
wherein the tool holder (10; 110; 210) has a tool holder main body (12; 112; 212) which comprises the tool portion (14; 114; 214) and/or the coupling portion (16; 116; 216), wherein at least one component of sensor (30, 32, 34, 36; 130, 136; 230, 236), electric circuit (40; 40a, 40b, 40c) and power supply device (42; 142) is received in a recess (56, 62; 56a, 56b; 156, 162; 256) in the interior of the tool holder main body (12; 112; 212),
**characterized in that**
at least one sensor as tool portion sensor (30; 130; 230) is disposed in the tool portion (14; 114; 214) of the tool holder main body (12; 112; 212) so as to be radially between a radially inner wall (18a; 118a; 218a) of a tool receptacle recess (18; 118; 218) of the tool receptacle formation (18; 118; 218) and a radially outer external wall (14a; 114a; 214a) of the tool holder main body (12; 112; 212).

2. Tool holder (10; 110; 210) with measuring device (28; 128; 228) according to Claim 1,
**characterized in that**
the tool holder (10; 110; 210) is integrally configured and comprises both the tool portion (14; 114; 214) as well as the coupling portion (16; 116; 216) .

3. Tool holder (10; 110; 210) with measuring device (28; 128; 228) according to Claim 1 or 2, or according to the preamble of Claim 1,
**characterized in that**
the tool holder (10; 110; 210) having the measuring device (28; 128; 228), when viewed orthogonally in relation to the tool holder rotation axis (D) and in at least two different viewing directions which are rotated relative to one another by 90° about the tool holder rotation axis (D), preferably in three different viewing directions of which two respective adjacent viewing directions are rotated relative to one another by 120° about the tool holder rotation axis (D), particularly preferably in each arbitrary viewing direction orthogonal to the tool holder rotation axis (D), has the same external contour as a tool holder without the measuring device, the latter tool holder being identical in terms of its subtractive machining function.

4. Tool holder (10; 110; 210) with measuring device (28; 128; 228) according to one of the preceding claims,
**characterized in that**
the tool holder main body (12; 112; 212) has an axial recess (56; 56a, 56b; 156; 256), preferably an annular recess (56; 156; 256) which extends completely about the tool holder rotation axis (D), in which the electric circuit (40; 40a, 40b, 40c) is received.

5. Tool holder (10) with measuring device (28) according to Claim 4,
**characterized in that**
the tool holder main body (12) has at least two axial recesses (56a, 56b), a component (54, 76) of the electric circuit (40; 40a, 40b, 40c) being received in each of said axial recesses (56a, 56b).

6. Tool holder (10) with measuring device (28) according to Claim 4 or 5,
**characterized in that**
the electric circuit (40; 40a, 40b, 40c) comprises a plurality of mutually separate conductor paths and rigid circuit substrates (76a, 76b, 76c) which support electrical components and which are preferably disposed in the axial recess (56) so as to be distributed in the circumferential direction about the tool holder rotation axis (D), particularly preferably distributed in such a manner that an axis of inertia of the entirety of the circuit substrates coincides substantially with the tool holder rotation axis (D), and/or **in that** the electric circuit (40; 40a, 40b, 40c) comprises a flexible circuit substrate (54; 154, 254) which supports conductor paths and electrical components and which is disposed in the axial recess (56; 156; 256) so as to be deformed, in particular rolled, about the tool holder rotation axis (D).

7. Tool holder (10; 110) with measuring device (28; 128) according to one of Claims 4 to 6, **characterized in that**
the at least one axial recess (56; 156), while delimiting a receptacle space, is able to be closed with a cover (58; 158), in particular a screw-on cover (58; 158).

8. Tool holder (10; 110; 210) with measuring device (28; 128; 228) according to one of the preceding claims,
**characterized in that**
the tool receptacle formation (18; 118; 218) is a shrink-fit chuck or a hydraulic expansion chuck or a milling head receptacle or a collet chuck or a power clamping chuck.

9. Tool holder (110) with measuring device (128) according to Claim 8,
**characterized in that**
the tool receptacle formation (118) is a hydraulic expansion chuck, and **in that** the tool portion sensor (130) is disposed in a wall of a pressurized chamber (170) of the hydraulic expansion chuck and is configured to detect indirectly or directly the clamping pressure in the pressurized chamber (170).

10. Tool holder (10; 110; 210) with measuring device (28; 128; 228) according to one of the preceding claims,
**characterized in that**
the at least one tool portion sensor (30; 130; 230) is a temperature sensor and/or a deformation sensor and/or an acceleration sensor and/or a pressure sensor.

11. Tool holder (10) with measuring device (28) according to one of the preceding claims, **characterized in that**
at least one sensor as coolant sensor (32) is disposed in a coolant duct (26a) for conducting a coolant and/or lubricant, preferably in a central coolant duct (26a) in the tool holder main body (12), wherein the coolant sensor (32) is preferably a temperature sensor and/or a pressure sensor and/or a flow sensor.

12. Tool holder (10; 110; 210) with measuring device (28; 128; 228) according to one of the preceding claims, while including Claim 4 or 5,
**characterized in that**
at least one sensor as body sensor (34, 36; 136; 236) is disposed in the axial recess (56; 156; 256), preferably on an internal wall delimiting the axial recess (56; 156; 256) radially towards the inside and/or on an external wall delimiting the axial recess (56; 156; 256) radially towards the outside, wherein the body sensor (34, 36; 136; 236) is preferably a temperature sensor and/or a deformation sensor and/or an acceleration sensor.

13. Tool holder (10; 110; 210) with measuring device (28; 128; 228) according to one of the preceding claims,
**characterized in that**
a plurality of sensors of identical type for detecting a first operating variable are disposed so as to be distributed in the circumferential direction about the tool holder rotation axis (D), wherein the measuring device (28; 128; 228) furthermore comprises a signal evaluation device which, by comparing the detection signals of the plurality of sensors, is configured to draw indirectly a conclusion pertaining to a second operating variable not directly detected by the sensors.

14. Device assembly (77) for machining workpieces, comprising at least one tool holder (10) according to one of the preceding claims, a machine tool (78) having a machine spindle which is configured for coupling to the at least one tool holder (10), and a receiver installation (82) which is configured for receiving the measurement signals transmitted by the signal transmission device (38).

## Revendications

1. Porte-outil (10 ; 110 ; 210), qui est configuré pour tourner autour d'un axe de rotation de porte-outil (D) définissant une direction axiale et qui présente, à l'une de ses extrémités longitudinales axiales (10a ; 110a ; 210a), une section d'outil (14 ; 114 ; 214) avec une formation de logement d'outil (18 ; 118 ; 218) pour loger un outil (11) et, à son autre extrémité longitudinale axiale (10b ; 110b ; 210b) une section de couplage (16 ; 116 ; 216) avec une formation de couplage (20 ; 120 ; 220) pour le couplage transmettant le couple avec une broche de machine d'une machine-outil (78), un dispositif de mesure (28 ; 128 ; 228) étant prévu sur le porte-outil (10 ; 110 ; 210) pour l'acquisition de données concernant le fonctionnement du porte-outil (10 ; 110 ; 210), lequel dispositif comprend au moins les composants suivants :
- au moins un capteur (30, 32, 34, 36 ; 130, 136 ; 230, 236) fournissant un signal d'acquisition,
- un dispositif de transmission de signaux (38 ; 138 ; 238) pour la transmission d'un signal de mesure du dispositif de mesure (28 ; 128 ; 228) à un dispositif de réception (82) configuré séparément du porte-outil (10 ; 110 ; 210) et agencé à distance de celui-ci,
- un circuit électrique (40 ; 40a, 40b, 40c) relié en vue de la transmission de signaux au capteur (30, 32, 34, 36 ; 130, 136 ; 230, 236) et au dispositif de transmission de signaux (38 ; 138 ; 238) pour commander le capteur (30, 32, 34, 36 ; 130, 136 ; 230, 236) ou/et pour traiter le signal d'acquisition du capteur (30, 32, 34, 36 ; 130, 136 ; 230, 236) ou/et pour commander le dispositif de transmission de signaux (38 ; 138 ; 238) ; 238), et
- un dispositif d'alimentation en énergie (42 ; 142) qui est relié en vue de la transmission d'énergie au dispositif de transmission de signaux (38 ; 138 ; 238) et au circuit électrique (40 ; 40a, 40b, 40c),
le porte-outil (10 ; 110 ; 210) présentant un corps de base de porte-outil (12 ; 112 ; 212) qui présente la section d'outil (14 ; 114 ; 214) ou/et la section de couplage (16 ; 116 ; 216), au moins un composant parmi le capteur (30, 32, 34, 36 ; 130, 136 ; 230, 236), le circuit électrique (40 ; 40a, 40b, 40c) et le dispositif d'alimentation en énergie (42 ; 142) étant logé dans un évidement (56, 62 ; 56a, 56b ; 156, 162 ; 256) à l'intérieur du corps de base de porte-outil (12 ; 112 ; 212),
**caractérisé en ce qu'**au moins un capteur, en tant que capteur de section d'outil (30 ; 130 ; 230), est agencé dans la section d'outil (14 ; 114 ; 214) du corps de base de porte-outil (12 ; 112 ; 212) radialement entre une paroi radialement intérieure (18a ; 118a ; 218a) d'un évidement de logement d'outil (18 ; 118 ; 218) de la formation de logement d'outil (18 ; 118 ; 218) et une paroi extérieure radialement extérieure (14a ; 114a ; 214a) du corps de base de porte-outil (12 ; 112 ; 212).

2. Porte-outil (10 ; 110 ; 210) avec dispositif de mesure (28 ; 128 ; 228) selon la revendication 1,
**caractérisé en ce que** le porte-outil (10 ; 110 ; 210) est configuré d'une seule pièce et présente à la fois la section d'outil (14 ; 114 ; 214) et la section de couplage (16 ; 116 ; 216).

3. Porte-outil (10 ; 110 ; 210) avec dispositif de mesure (28 ; 128 ; 228) selon la revendication 1 ou 2 ou selon le préambule de la revendication 1,
**caractérisé en ce que** le porte-outil (10 ; 110 ; 210) avec dispositif de mesure (28 ; 128 ; 228), lorsqu'il est observé orthogonalement à l'axe de rotation de porte-outil (D), présente, dans au moins deux directions d'observation différentes, qui sont tournées de 90° l'une par rapport à l'autre autour de l'axe de rotation de porte-outil (D), de préférence dans trois directions d'observation différentes, dont respectivement deux directions d'observation voisines sont tournées de 120° l'une par rapport à l'autre autour de l'axe de rotation de porte-outil (D), de manière particulièrement préférée dans n'importe quelle direction d'observation orthogonale à l'axe de rotation de porte-outil (D), le même contour extérieur qu'un porte-outil sans dispositif de mesure, identique en termes de fonction d'usinage par enlèvement de copeaux.

4. Porte-outil (10 ; 110 ; 210) avec dispositif de mesure (28 ; 128 ; 228) selon l'une quelconque des revendications précédentes,
**caractérisé en ce que** le corps de base de porte-outil (12 ; 112 ; 212) présente un évidement axial (56 ; 56a, 56b ; 156 ; 256), de préférence un évidement annulaire (56 ; 156 ; 256) s'étendant entièrement autour de l'axe de rotation de porte-outil (D), dans lequel est logé le circuit électrique (40 ; 40a, 40b, 40c).

5. Porte-outil (10) avec dispositif de mesure (28) selon la revendication 4,
**caractérisé en ce que** le corps de base de porte-outil (12) présente au moins deux évidements axiaux (56a, 56b) dans lesquels est logé respectivement un composant (54, 76) du circuit électrique (40 ; 40a, 40b, 40c).

6. Porte-outil (10) avec dispositif de mesure (28) selon la revendication 4 ou 5,
**caractérisé en ce que** le circuit électrique (40 ; 40a, 40b, 40c) comprend plusieurs substrats de circuit rigides (76a, 76b, 76c) portant des pistes conductrices et des composants électriques séparés les uns des autres, qui sont de préférence agencés répartis dans la direction circonférentielle autour de l'axe de rotation de porte-outil (D) dans l'évidement axial (56), de manière particulièrement préférée répartis de telle sorte qu'un axe de portance de l'ensemble des substrats de circuit coïncide essentiellement avec l'axe de rotation de porte-outil (D), ou/et **en ce que** le circuit électrique (40 ; 40a, 40b, 40c) comprend un substrat de circuit flexible (54 ; 154, 254) portant des pistes conductrices et des composants électriques, qui est agencé dans l'évidement axial (56 ; 156 ; 256) en étant déformé autour de l'axe de rotation de porte-outil (D), notamment enroulé.

7. Porte-outil (10 ; 110) avec dispositif de mesure (28 ; 128) selon l'une quelconque des revendications 4 à 6,
**caractérisé en ce que** l'au moins un évidement axial (56 ; 156) peut être fermé avec un couvercle (58 ; 158), notamment un couvercle à vis (58 ; 158), en délimitant un espace de logement.

8. Porte-outil (10 ; 110 ; 210) avec dispositif de mesure (28 ; 128 ; 228) selon l'une quelconque des revendications précédentes,
**caractérisé en ce que** la formation de logement d'outil (18 ; 118 ; 218) est un mandrin de frettage ou un mandrin de serrage à expansion hydraulique ou un logement de tête porte-lames ou un mandrin à pince de serrage ou un mandrin de serrage par force.

9. Porte-outil (110) avec dispositif de mesure (128) selon la revendication 8,
**caractérisé en ce que** la formation de logement d'outil (118) est un mandrin de serrage à expansion hydraulique et **en ce que** le capteur de section d'outil (130) est agencé dans une paroi d'une chambre de pression (170) du mandrin de serrage à expansion hydraulique et est configuré pour acquérir directement ou indirectement la pression de serrage dans la chambre de pression (170).

10. Porte-outil (10 ; 110 ; 210) avec dispositif de mesure (28 ; 128 ; 228) selon l'une quelconque des revendications précédentes,
**caractérisé en ce que** l'au moins un capteur de section d'outil (30 ; 130 ; 230) est un capteur de température ou/et un capteur de déformation ou/et un capteur d'accélération ou/et un capteur de pression.

11. Porte-outil (10) avec dispositif de mesure (28) selon l'une quelconque des revendications précédentes,
**caractérisé en ce qu'**au moins un capteur est agencé en tant que capteur de fluide de refroidissement (32) dans un canal de fluide de refroidissement (26a) pour le passage d'un fluide de refroidissement ou/et de lubrification, de préférence dans un canal de fluide de refroidissement central (26a), dans le corps de base de porte-outil (12), le capteur de fluide de refroidissement (32) étant de préférence un capteur de température ou/et un capteur de pression ou/et un capteur de débit.

12. Porte-outil (10 ; 110 ; 210) avec dispositif de mesure (28 ; 128 ; 228) selon l'une quelconque des revendications précédentes, en tenant compte de la revendication 4 ou 5,
**caractérisé en ce qu'**au moins un capteur est agencé en tant que capteur de corps (34, 36 ; 136 ; 236) dans l'évidement axial (56 ; 156 ; 256), de préférence sur une paroi intérieure délimitant l'évidement axial (56 ; 156 ; 256) radialement vers l'intérieur ou/et sur une paroi extérieure délimitant l'évidement axial (56 ; 156 ; 256) radialement vers l'extérieur, le capteur de corps (34, 36 ; 136 ; 236) étant de préférence un capteur de température ou/et un capteur de déformation ou/et un capteur d'accélération.

13. Porte-outil (10 ; 110 ; 210) avec dispositif de mesure (28 ; 128 ; 228) selon l'une quelconque des revendications précédentes,
**caractérisé en ce qu'**une pluralité de capteurs de même type pour l'acquisition d'une première grandeur de fonctionnement sont agencés répartis dans la direction circonférentielle autour de l'axe de rotation de porte-outil (D), le dispositif de mesure (28 ; 128 ; 228) comprenant en outre un dispositif d'évaluation de signaux qui est configuré pour déduire indirectement, par comparaison des signaux d'acquisition de la pluralité de capteurs, une deuxième grandeur de fonctionnement non acquise directement par les capteurs.

14. Agencement de dispositif (77) pour l'usinage de pièces, comprenant au moins un porte-outil (10) selon l'une quelconque des revendications précédentes, une machine-outil (78) avec une broche de machine, qui est configurée pour être couplée avec l'au moins un porte-outil (10), ainsi qu'un appareil de réception (82), qui est configuré pour recevoir les signaux de mesure transmis par le dispositif de transmission de signaux (38) .
